# EUROPEAN PATENT SPECIFICATION

(11) **EP 3 972 014 B1**
(45) Date of publication and mention of the grant of the patent: **29.04.2026**
(21) Application number: 20882730.3
(22) Date of filing: 28.10.2020
(51) Int. Cl.: H01M 10/0525, H01M 4/02, H01M 4/04, H01M 4/1391, H01M 4/48, H01M 4/58, H01M 4/62, H01M 4/36

(54) **NEGATIVE ELECTRODE MATERIAL AND PREPARATION METHOD THEREFOR, AND LITHIUM-ION BATTERY**
NEGATIVES ELEKTRODENMATERIAL UND VERFAHREN ZU SEINER HERSTELLUNG SOWIE LITHIUM-IONEN-BATTERIE
MATÉRIAU D'ÉLECTRODE NÉGATIVE ET PROCÉDÉ DE PRÉPARATION ASSOCIÉ, AINSI QUE BATTERIE AU LITHIUM-ION

(30) Priority: 30.10.2019 CN 201911046597
(43) Date of publication of application: 23.03.2022
(73) Proprietor: BTR NEW MATERIAL GROUP CO., LTD., Shenzhen, Guangdong 518106 (CN); Dingyuan New Energy Technology Co., Ltd., Huizhou, Guangdong 516227 (CN)
(72) Inventor: QU, Lijuan, Shenzhen, Guangdong 518106 (CN); DENG, Zhiqiang, Shenzhen, Guangdong 518106 (CN); PANG, Chunlei, Shenzhen, Guangdong 518106 (CN); REN, Jianguo, Shenzhen, Guangdong 518106 (CN); HE, Xueqin, Shenzhen, Guangdong 518106 (CN)
(74) Representative: Studio Torta S.p.A.
(86) International application number: PCT/CN2020/124347
(87) International publication number: WO 2021/083199

(56) References cited:
- WO-A1-2019/065195
- WO-A1-2020/080452
- CN-A- 102 292 854
- CN-A- 106 575 751
- CN-A- 106 816 594
- CN-A- 106 816 594
- CN-A- 107 112 534
- CN-A- 109 524 650
- CN-A- 109 950 510
- TW-A- 201 937 799
- US-A1- 2017 117 543
- US-A1- 2017 117 543
- US-A1- 2017 214 041
- G.WEN ET AL.: "Effects of P2O5 and sintering temperature on microstructure and mechanical properties of lithium disilicate glass-ceramics.", ACTA MATERIALIA, vol. 55, no. 10, 3 April 2007 (2007-04-03), XP022059686, ISSN: 1359-6454, DOI: 10.1016/j.actamat.2007.02.009

## Description

### TECHNICAL FIELD

The present application belongs to the technical field of battery material, and relates to an anode material, a preparation method thereof and a lithium ion battery.

### BACKGROUND

Lithium ion batteries have been widely used in portable electronic products and electric vehicles because of their high working voltage, long cycle life, no memory effect, small self-discharge and environmental friendliness. At present, commercial lithium ion batteries mainly use graphites anode material, but its theoretical specific capacity is only 372 mAh/g, which cannot meet the demand of high energy density for future lithium ion batteries. Although the theoretical capacity of the existing Si is as high as 4200 mAh/g, its expansion is up to 300%, which affects the cycle performance and restricts the market promotion and application. The corresponding silicon-oxygen material has a better cycle performance, but the initial efficiency is low. When charging for the first time, 20% - 50% lithium needs to be consumed for SEI film formation, which greatly reduces the initial coulombic efficiency. With the increasing initial efficiency of cathode material, it is particularly important to improve the initial efficiency of silicon-oxygen material.

At present, an effective way to improve the initial efficiency of silicon-oxygen material is to dope them with lithium in advance, so that the irreversible lithium consumption phase in the silicon-oxygen material can be reacted away in advance. At present, the industrialized method is to directly coat a lithium layer on the surface of the polar plate, so as to achieve the effect of reducing the lithium consumption in the anode. However, this method has high requirements on the operating environment and great potential safety hazards, so it is difficult to realize industrial promotion. In the state of the present technological development, there is a general problem of poor processing performance when the initial efficiency is improved by pre-lithiation at the material end, which is mainly manifested as: serious gas production of a water-based slurry, low viscosity, tailing during coating, pinholes and pores after drying of polar plates, etc. The main reason for this problem is that there are a large number of phases of Li₂SiO₃, Li₄SiO₄, even Li₂O and LiₓSi in the pre-lithiated material, and these components are easily soluble in water, which shows strong basicity and leads to poor processability.

Therefore, poor processability is still a common problem of pre-lithiated material, and it is also a technical difficulty.

A lithium ion battery, a nano silicon material and a preparation method thereof were disclosed, which includes the following steps: uniformly mixing silicon dioxide, magnesium metal and a dopant according to a specified mass ratio to obtain a mixture; placing the mixture in a high-temperature reaction furnace, introducing an inert gas, heating to a specified temperature at a specified heating rate, reacting at a high temperature for a period of time, and naturally cooling to room temperature to obtain a reaction product; taking out the reaction product, carrying out preliminary water washing, acid washing, water washing again and drying to obtain coarse-grained silicon; uniformly mixing the coarse-grained silicon and a dispersant according to a specified mass ratio, grinding for a specified time according to a specified grinding process, drying and sieving to obtain nano silicon. Although the rate performance and cycle performance of the one obtained by this method are acceptable, the initial efficiency and processing performance need to be improved.

Another method for improving the performance of a silicon anode material of a lithium ion battery were disclosed, which includes the following steps: (1) preparing a anode of a silicon monoxide composite material: 1) weighing a certain amount of SiO powder, pouring it into deionized water whose mass is 10 times that of SiO, and then adding a certain amount of graphite and glucose; 2) putting the mixed solution into a high-energy ball mill for ball milling; 3) putting the ball-milled precursor material into a tubular furnace; 4) taking out the prepared SiO/C composite material, and mixing it with conductive agent acetylene black and binder PVDF according to a certain proportion; (2) performing pre-lithiation treatment on the electrode. The initial efficiency and processing performance of the one obtained by this method cannot meet the market demand.

Another silicon-based anode plate, a preparation method thereof and a lithium ion battery were disclosed. The anode coating of the silicon-based anode plate provided by this application includes a first coating on a current collector and a second coating on the first coating, wherein the active substance in the first coating includes silicon-based anode material, the active substance in the second coating does not contain the silicon-based anode material, and the surface of the second coating contains lithium. The preparation method includes: 1) coating a first slurry containing a silicon-based anode material on a current collector to form a first coating; 2) forming a second coating on the first coating by using a second slurry which does not contain the silicon-based anode material; 3) pre-doping lithium on the polar plate containing the second coating to obtain the silicon-based anode plate. The method has a long and complicated process, thus is difficult to be applied in industry.

Prior art document CN109950510A discloses an anode plate including an anode current collector and an anode paste coated on the anode current collector, where the anode paste includes an anode active material, an anode adhesive and an anode conductive agent, the anode active material is a mixture of Li_{y}-SiOₓ and graphite; and the Li-SiOₓ accounts for 1% to 55% of the anode active material.

Prior art document US2017/0214041A1 discloses that in a nonaqueous electrolyte secondary battery containing a silicon material as a negative electrode active material, the initial charge-discharge efficiency is improved. Negative electrode active material particles (10) according to an embodiment each contain a lithium silicate phase (11) represented by Li_{2z}SiO_{(2+z)} (where 0<z<2) and silicon particles (12) dispersed in the lithium silicate phase (11 ). In base particles (13) each containing the lithium silicate phase (11) and the silicon particles (12), preferably, a peak originating from SiO₂ is not observed at 2θ=25° in an XRD pattern obtained by XRD measurement of the particles.

Prior art document US2017/0117543A1 discloses that a negative electrode active material particle and a method for preparing the same. The negative electrode active material particle includes SiOₓ (0<x≤2) and Li₂Si₂O₅, and includes less than 2 wt % of Li₂SiO₃ and Li₄SiO₄.

### SUMMARY

Therefore, the purpose of the present application is to provide an anode material with excellent processing performance after pre-lithiation, a preparation method thereof and a lithium ion battery.

For this, the present application adopts the following technical solution:

In a first aspect, the present application provides an anode material including SiOₓ and Li₂Si₂O₅, wherein the SiOₓ is dispersed in the Li₂Si₂O₅, and wherein 0≤x≤1.2,
wherein a pH value of the anode material meets 7 < pH < 10.7.

The lithium-containing compound in the anode material provided by the present application is Li₂Si₂O₅ and because Li₂Si₂O₅ is insoluble in water, the processing stability problems of the pre-lithiated material, such as gas production of slurry, low viscosity, tailing during coating, pinholes and pores after drying the polar plate, and the like, can be fundamentally solved. No additional surface treatment is needed for the pre-lithiated material, which can avoid the problems of capacity reduction and initial efficiency reduction of lithium batteries due to surface treatment.

In a preferred embodiment, the anode material satisfies at least one of the following conditions a to c:
a. an average particle size of the anode material is 5µm-50µm;
b. a mass ratio of the SiOₓ to the Li₂Si₂O₅ in the anode material is 1: (0.74-6.6); and
c. the SiOₓ is uniformly dispersed in the Li₂Si₂O₅.

In a preferred embodiment, the anode material satisfies at least one of the following conditions a to c:
a. a carbon coating layer is formed on a surface of the anode material;
b. a carbon coating layer is formed on the surface of the anode material, and a thickness of the carbon coating layer is 10nm-2000nm; and
c. a carbon coating layer is formed on the surface of the anode material, and a mass fraction of a carbon element in the anode material is 4%-6%.

In a second aspect, the present application provides a method for preparing an anode material, including the following steps:
mixing a silicon oxide SiO_{y}, a reducing lithium-containing compound and an auxiliary agent, and performing heat treatment to obtain the anode material, wherein the auxiliary agent comprises a nucleating conversion agent or a heat absorbent, and 0<y<2,
wherein the reducing lithium compound comprises at least one of lithium hydride, alkyl lithium, metallic lithium, lithium aluminum hydride, lithium amide or lithium borohydride;
wherein the nucleating conversion agent comprises at least one of phosphorus oxide and phosphate; and
wherein the heat absorbent comprises at least one of LiCl, NaCl, NaNO₃, KNO₃, KOH, BaCl, KCl and LiF.

The preparation method provided by the present application can make the final pre-lithiated product only has Li₂Si₂O₅ but no Li₂SiO₃ by adding the nucleating conversion agent or the heat absorbent, thus fundamentally solving the processing problem of the pre-lithiated material and simplifing the preparing process of the pre-lithiated material, that is, no additional surface treatment of the pre-lithiated material is needed, which prevents the problems such as gas production. In addition, the resulting Li₂SiO₃ in a high-temperature crystalline phase is directly transformed into Li₂Si₂O₅ in a low-temperature crystalline phase by adding the nucleating conversion agent or the heat absorbent, which can avoid the problems such as capacity reduction and initial efficiency reduction of the anode material due to surface treatment.

In a preferred embodiment, the anode material satisfies at least one of the following conditions a to f:
a. a pH value of the anode material meets 7 < pH < 10.7;
b. an average particle size of the anode material is 5µm-50µm;
c. a mass ratio of the SiOₓ to the Li₂Si₂O₅ in the anode material is 1: (0.74-6.6).
d. a carbon coating layer is formed on a surface of the anode material;
e. a carbon coating layer is formed on the surface of the anode material, and a thickness of the carbon coating layer is 10 nm to 2000 nm; and
f. a carbon coating layer is formed on the surface of the anode material, and a mass fraction of a carbon element in the anode material is 4%-6%.

In a preferred embodiment, the method satisfies at least one of the following conditions a to c:
a. a mass ratio of the silicon oxide to the reducing lithium-containing compound is 10: (0.08-1.2);
b. the silicon oxide is silicon monoxide; and
c. the silicon oxide has a D10> 1.0 µm and a Dmax< 50 µm.

In a preferred embodiment, the method satisfies at least one of the following conditions a to f:
a. the phosphorus oxide comprises at least one of phosphorus pentoxide and phosphorus trioxide;
b. the phosphate comprises at least one of lithium phosphate, magnesium phosphate and sodium phosphate;
c. the nucleating conversion agent is phosphorus pentoxide;
d. a melting point of the heat absorbent is less than 700°C;
e. a mass ratio of the silicon oxide to the nucleating conversion agent is 100: (2-10); and
f. a mass ratio of the silicon oxide to the heat absorber is 100: (8-30).

In a preferred embodiment, the method satisfies at least one of the following conditions a to d:
a. the heat treatment is carried out in a non-oxidizing atmosphere;
b. the heat treatment is carried out in a non-oxidizing atmosphere; the non-oxidizing atmosphere comprises at least one of hydrogen, nitrogen, helium, neon, argon, krypton and xenon;
c. a temperature of the heat treatment is 300°C-1000°C; and
d. a time of the heat treatment is 1.5h to 2.5h.

In a preferred embodiment, before mixing the silicon oxide SiO_{y}, the reducing lithium-containing compound, and the nucleating conversion agent or the heat absorbent, the method further comprises:
heating and gasifying a raw material of the silicon oxide to generate a silicon oxide gas, condensing and shaping to obtain the silicon oxide SiO_{y}, wherein 0<y<2.

In a preferred embodiment, the method satisfies at least one of the following conditions a to g:
a. the raw material of the silicon oxide include silicon and silicon dioxide;
b. a mass ratio of the silicon to the silicon dioxide is 1: (1.8-2.2);
c. a temperature of the heating and gasifying is 1200°C-1400°C;
d. a time for the heating and gasifying is 16h to 20h;
e. a temperature for the condensing is 930°C-970°C;
f. the heating and gasifying is carried out in a protective atmosphere or vacuum; and
g. the shaping comprises at least one of crushing, ball milling and grading.

In a preferred embodiment, the method further comprises:
performing carbon coating on a material to be coated with carbon, wherein the material to be coated with carbon comprises at least one of the silicon oxide and the anode material.

In a preferred embodiment, the method satisfies at least one of the following conditions a to c:
a. the carbon coating comprises at least one of gas-phase carbon coating and solid-phase carbon coating;
b. the carbon coating comprises at least one of gas-phase carbon coating and solid-phase carbon coating, and the conditions of the gas-phase carbon coating are as follows: heating the silicon oxide to 600°C-1000°C in a protective atmosphere, introducing an organic carbon source gas, keeping the temperature for 0.5h-10h, and then cooling; wherein the organic carbon source gas comprises hydrocarbons, and the hydrocarbons comprise at least one of methane, ethylene, acetylene and benzene; and
c. the carbon coating comprises at least one of gas-phase carbon coating and solid-phase carbon coating, and the conditions of the solid-phase carbon coating are as follows: blending the silicon oxide and a carbon source for 0.5h to 2h, and then carbonizing the obtained carbon mixture for 2h to 6h at 600°C-1000°C, and cooling; wherein the carbon source comprises at least one of polymers, saccharides, organic acids and asphalt.

In a preferred embodiment, the method comprises the following steps:
heating and gasifying silicon and silicon dioxide in a mass ratio of 1: (1.8-2.2) at 1200°C-1400°C in vacuum for 16h-20h, condensing at 930°C-970°C, and shaping to obtain silicon monoxide;
performing carbon coating on the silicon monoxide to obtain carbon-coated silicon monoxide;
mixing the carbon-coated silicon oxide and phosphorus pentoxide according to a mass ratio of 100: (2-10), adding a reducing lithium-containing compound and mixing, and roasting at 450°C-800°C for 1.5h-2.5h in a non-oxidizing atmosphere to obtain the anode material; wherein a mass ratio of the carbon-coated silicon monoxide to the reducing lithium-containing compound is 10: (0.08-1.2).

In a third aspect, the present application provides a lithium ion battery including the anode material according to the first aspect or the anode material prepared by the preparation method according to the second aspect.

With respect to the prior art, the present application has the following beneficial effects:
(1) the preparation method provided by the present application can make the final pre-lithiated product only has Li₂Si₂O₅ in a low-temperature crystalline phase but no Li₂SiO₃ in a high-temperature crystalline phase by adding the nucleating conversion agent or the heat absorbent, thus fundamentally solving the processing problem of the pre-lithiated material and simplifying the preparation process of the pre-lithiated material, that is, no additional surface treatment of the pre-lithiated material is needed, which prevents the problems such as gas production. In addition, Li₂SiO₃ in a high temperature crystalline phase can be directly transformed into Li₂Si₂O₅ in a low temperature crystalline phase by adding the nucleating conversion agent or the heat absorbent, which can avoid the problems such as capacity reduction and initial efficiency reduction of the anode material due to surface treatment.
(2) The anode material provided by the present application has the advantages of a stable processability, a high initial efficiency and a long cycle life.

### BRIEF DESCRIPTION OF DRAWINGS

FIG. 1 is a process flow chart of a preparation method of an anode material provided by the present application;
FIG. 2 is an XRD pattern of the anode material prepared in Example 2 of the present application;
FIG. 3a is a gas production test photograph of the anode material prepared in Example 2 of the present application;
FIG. 3b is a coating test photograph of the anode material prepared in Example 2 of the present application;
FIG. 4 is an XRD pattern of the anode material prepared in Comparative example 2;
FIG. 5a is a gas production test photograph of the anode material prepared in Comparative example 2;
FIG. 5b is a coating test photograph of the anode material prepared in Comparative example 2.

### DESCRIPTION OF EMBODIMENTS

In order to better explain the present application and facilitate understanding of the technical solution of the present application, the present application is further described in detail below. However, the following examples are only simple examples of the present application, and do not represent or limit the scope of protection of the present application, which shall be defined by the claims.

The follow are typical but non-limiting examples of the present application:

Most silicon-based/silica-based materials will produce a certain amount of irreversible phases (such as Li₄SiO₄, Li₂O, etc.) during the initial lithium intercalation, which leads to the low initial coulombic efficiency of the battery. Lithium is doped into the anode material by pre-lithiation. Therefore, in the formation process of the battery, a SEI film formed at the interface of the anode will consume lithium in the anode material, instead of lithium ions deintercalated from the cathode, thereby maximally retaining the lithium ions deintercalated from the cathode and improving the capacity of the whole battery. At present, there are a large number of phases of Li₂SiO₃, Li₄SiO₄, even Li₂O and LixSi in the pre-lithiated material, which will consume the electrolyte and Li removed from the cathode, and this process is irreversible, resulting in serious loss of the initial reversible capacity. Moreover, these components are easily soluble in water, showing strong alkalinity, resulting in poor processability.

In a first aspect, an embodiment of the present application provides an anode material including SiOₓ and Li₂Si₂O₅, wherein SiOₓ is dispersed in Li₂Si₂O₅, and wherein 0≤x≤1.2.

The anode material provided in the present application only contains one lithium silicate phase, i.e. Li₂Si₂O₅. Since Li₂Si₂O₅ is insoluble in water, it can fundamentally solve the processing stability problems of the anode material after pre-lithiation treatment, such as gas production of slurry, low viscosity, tailing during coating, pinholes and pores after drying the polar plate, etc. No additional surface treatment is needed for the pre-lithiated material, which can avoid the problems of capacity reduction and initial efficiency reduction of lithium batteries due to surface treatment. As an optional technical solution of the present application, the SiOₓ is uniformly dispersed in Li₂Si₂O₅, for example, watermelon seeds (SiOₓ) are dispersed in watermelon capsules (Li₂Si₂O₅).

As an optional technical solution of the present application, in SiOₓ, 0≤x≤1.2, and SiOₓ can be, for example, Si, SiO_{0.2}, SiO_{0.4}, SiO_{0.6}, SiO_{0.8}, SiO or SiO_{1.2}, etc. Preferably, SiOₓ is SiO. Understandably, the composition of SiOₓ is relatively complex, which can be understood as being formed by uniformly dispersing nano-silicon in SiO₂.

As an optional technical solution of the present application, the average particle size of the anode material is 5µm-50µm; more specifically, it can be, but not limited to, 5µm, 10µm, 15µm, 20µm, 25µm, 30µm, 35µm, 40µm or 50µm, etc., and other unlisted values within the numerical range are also applicable. The average particle size of the silicon composite anode material is controlled within the above range, which is beneficial to improve the cycle performance of the anode material.

As an optional technical solution of the present application, the mass ratio of SiOₓ to Li₂Si₂O₅ in the anode material is 1: (0.74-6.6); more specifically, it can be, but not limited to, 1:0.74, 1:1.4, 1:1.6, 1:2.0, 1:2.3, 1:2.9, 1:3.5, 1:4, 1:5.0, 1:6.1 or 1:6.6, etc., and other unlisted values within the numerical range are also applicable. When the mass ratio of SiOₓ to Li₂Si₂O₅ is too less, the content of Li₂Si₂O₅ in the material is too less, and the slurry made of the anode material is easy to produce gas, and pinholes and bubbles are easy to appear after drying the polar plate, which is not conducive to improving the processability of the anode material. When the mass ratio of SiOₓ to Li₂Si₂O₅ is too large, the content of Li₂Si₂O₅ in the material is too large, and the lithium ion transmission efficiency decreases, which is not conducive to the high-rate charge and discharge of the material.

In a specific embodiment, the anode material only contains Li₂Si₂O₅.

As an optional technical solution of the present application, the pH value of the anode material meets 7 < pH < 10.7, and for example, the pH value can be 7.1, 8.0, 9.3, 9.8, 9.9, 10.0, 10.1, 10.2, 10.3, 10.4, 10.5 or 10.6, etc. Understandably, the material can be kept at a low alkalinity, the water-based processability of the material can be improved, and the initial efficiency of the anode material can be improved.

As an optional technical solution of the present application, the surface of the anode material is coated with a carbon layer.

Optionally, the thickness of the carbon layer is 10 nm to 2000 nm; specifically, it can be, but not limited to, 10nm, 50nm, 100nm, 300nm, 500nm, 800nm, 1000nm, 1500nm, 1800nm or 2000nm, and other unlisted values within the numerical range are also applicable. Too thick a carbon layer reduces lithium ion transmission efficiency, which is not conducive to high-rate charge and discharge of the material and reduces the comprehensive performance of the anode material. Too thin a carbon layer is not conducive to increasing the conductivity of the anode material, and has weak inhibition performance on volume expansion of the material, resulting in a poor long cycle performance.

Preferably, when the surface of the anode material is coated with a carbon layer, the mass fraction of the carbon element in the anode material is 4%-6%, more specifically, it can be, but not limited to, 4%, 4.5%, 5%, 5.5% or 6%, etc., and other unlisted values within the numerical range are also applicable.

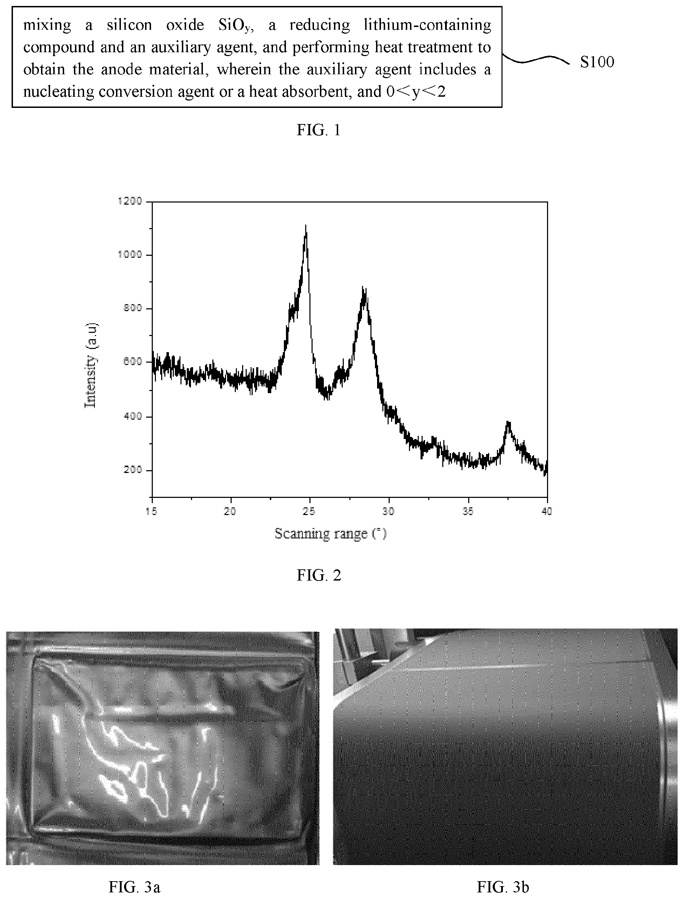

In a second aspect, the present application provides a preparation method of the anode material, as shown in FIG. 1, which includes the following steps:

S100, mixing a silicon oxide SiO_{y}, a reducing lithium-containing compound and an auxiliary agent, and performing heat treatment to obtain the anode material, wherein the auxiliary agent includes a nucleating conversion agent or a heat absorbent, and 0<y<2.

The preparation method provided by the present application can make only one lithium silicate phase, i.e. Li₂Si₂O₅ is generated after the silicon oxide reacts with the reducing lithium-containing compound (i.e., pre-lithiation) by using the nucleating conversion agent or the heat absorbent. Since Li₂Si₂O₅ is insoluble in water, the processing stability problems of the pre-lithiated material, such as gas production of slurry, low viscosity, tailing during coating, pinholes and pores after drying the polar plate, etc., are solved.

It should be noted that the nucleating conversion agent can be used to accelerate the crystallization rate, increase the crystallization density and promote the grain size refinement. In the preparation process, the silicon oxide SiO_{y} and the reducing lithium-containing compound can generate Li₂SiO₃ and Li₂Si₂O₅, and the added nucleating conversion agent can accelerate the crystallization rate and promote the generated Li₂SiO₃ in a high temperature crystalline phase to be transformed into Li₂Si₂O₅ in a low temperature crystalline phase, thus avoiding the problems of capacity reduction and initial efficiency reduction due to surface treatment.

It should be noted that the heat absorbent can be used to lower the reaction temperature. In the preparation process, the silicon oxide SiO_{y} and reducing lithium-containing compound can generate Li₂SiO₃ and Li₂Si₂O₅, and the added heat absorbent can reduce the reaction temperature. With the reduction of the reaction temperature, it is beneficial to promote the phase shift of the generated lithium silicate crystals to Li₂Si₂O₅ phase which is a low-temperature crystalline phase, that is, to promote the generated Li₂SiO₃ in a high-temperature crystalline phase to be transformed into Li₂Si₂O₅ in a low-temperature crystalline phase, thus avoiding the problems of capacity reduction and initial efficiency reduction due to surface treatment.

The following is the preferred technical solutions of the present application, but not the limitation of the technical solution provided by the present application. The technical purpose and beneficial effects of the present application can be better achieved and realized through the following preferred technical solutions.

As an optional technical solution of the present application, in the silicon oxide SiO_{y}, 0<y<2, for example, SiO_{y} is SiO_{0.2}, SiO_{0.5}, SiO_{0.8}, SiO, SiO_{1.2}, SiO_{1.5} or SiO_{1.9}, etc. Preferably, the silicon oxide is SiO, and when the silicon oxide is SiO, it can effectively solve the problem of unstable processing performance of SiO, after improving the initial efficiency by being doped with lithium.

Preferably, the particle size D10 of the silicon oxide particles meets the particle size

D10>1.0µm and Dmax<50µm. For example, D10 is 1.0µm, 1.5µm, 2.0µm, 2.5µm, 3.0µm, 4.0µm or 5.0µm, and Dmax is 49µm, 45µm, 30µm, 35µm or 20 µ m. Here, Dmax refers to the particle size of the largest particle.

As an optional technical solution of the present application, the reducing lithium-containing compound includes at least one of lithium hydride, alkyl lithium, metallic lithium, lithium aluminum hydride, lithium amide and lithium borohydride.

As an optional technical solution of the present application, the nucleation conversion agent comprises at least one of phosphorus oxide and phosphate. Optionally, the phosphorus oxide includes at least one of phosphorus pentoxide and phosphorus trioxide.

As an optional technical solution of the present application, the phosphate includes at least one of lithium phosphate, magnesium phosphate and sodium phosphate.

Preferably, the nucleation conversion agent is phosphorus pentoxide. In the present application, it is particularly preferred to use phosphorus pentoxide as the nucleating conversion agent, which has the advantages that the effect of transforming Li₂SiO₃ into Li₂Si₂O₅ is more significant, and the amount of nucleating conversion agent can be reduced, so as to reduce the production cost on the one hand and the production difficulty on the other hand.

As an optional technical solution of the present application, the melting point of the heat absorbent is less than 700°C; the heat absorbent includes at least one of LiCl, NaCl, NaNO₃, KNO₃, KOH, BaCl, KCl and LiF.

Preferably, the heat absorbent is KNO₃. In the present application, KNO₃ is particularly preferred as a heat absorbent, which has the advantages that, firstly, the use temperature of KNO₃ is low, and the promotion effect on the formation of Li₂Si₂O₅ is more significant; secondly, KNO₃ is low in cost, easily available as a raw material, non-toxic and harmless, and environmentally friendly.

As an optional technical solution of the present application, the mass ratio of the silicon oxide to the reducing lithium-containing compound is 10:(0.08-1.2), for example but not limited to, 10:0.08, 10:0.2, 10:0.5, 10:0.8 or 10:1.2, etc., and other unlisted values within the numerical range are also applicable. The mass ratio within the above range is beneficial to improve the conversion rate of Li₂SiO₃ into Li₂Si₂O₅.

As an optional technical solution of the present application, the mass ratio of the silicon oxide to the nucleating conversion agent is 100: (2-10), for example but not limited to, 100:2, 100:2.5 or 100:3, 100:5, 100:7, 100:10, etc., and other unlisted values within the numerical range are also applicable. Understandably, if the amount of the nucleating conversion agent is too large, the crystal grain of Li₂Si₂O₅ will be too large, which will affect the cycle performance. If the amount of the nucleating conversion agent is too less, it will lead to residual Li₂SiO₃, which will affect the processing stability of the water-based slurry of the material.

As an optional technical solution of the present application, the mass ratio of the silicon oxide to the heat absorbent is 100: (8-30), for example but not limited to, 100:8, 100:10, 100:15, 100:20, 100:25 or 100:30, etc., and other unlisted values within the numerical range are also applicable.

As an optional technical solution of the present application, the specific step of mixing the silicon oxide, the reducing lithium-containing compound and the nucleating conversion agent includes: mixing the silicon oxide and the nucleating conversion agent, and then adding the reducing lithium-containing compound.

Understandably, after mixing silicon oxide and the nucleating conversion agent, the nucleating conversion agent adheres to the surface of silicon oxide. When the reducing lithium-containing compound reacts with the silicon oxide, the nucleating conversion agent adhered to the surface of silicon oxide can timely transform part of Li₂SiO₃ in a high-temperature crystalline phase generated by the reaction into Li₂Si₂O₅ in a low-temperature crystalline phase, that is, as the reaction progresses, the phase transformation of lithium silicate also proceeds at the same time, and the nucleating conversion agent promotes the shift of the crystals of lithium silicate to Li₂Si₂O₅ in a low-temperature crystalline phase and transforms the crystal structure of lithium silicate.

Optionally, the heat treatment is carried out in a non-oxidizing atmosphere, and the non-oxidizing atmosphere includes at least one of hydrogen, nitrogen, helium, neon, argon, krypton or xenon.

In some specific embodiments, the heat treatment may be performed in a firing furnace, so that the heat treatment is sufficiently performed.

Optionally, the temperature of the heat treatment is 300°C-1000°C, for example but not limited to, 300°C, 400°C, 450°C, 480°C, 500°C, 600°C, 700°C, 800°C, 900°C or 1000°C, etc., and other unlisted values within the numerical range are also applicable. Understandably, when the heat treatment temperature is too high, it will lead to severe reaction, rapid growth of silicon grains, disproportionation of SiO, and deterioration of properties, which will affect the cycle performance of the material. When the heat treatment temperature is too low, the reaction is difficult to proceed, resulting in the inability to form Li₂Si₂O₅. Preferably, the temperature of the heat treatment is 450°C-800°C.

Preferably, the time of the heat treatment is 1.5h-2.5 h, for example but not limited to, 1.5 h, 1.7 h, 2 h, 2.3 h or 2.5 h, and other unlisted values within the numerical range are also applicable. Understandably, full calcination can fully transform Li₂SiO₃ into Li₂Si₂O₅.

Further, before the step S100, the method further includes:

heating and gasifying a raw material of the silicon oxide to generate a silicon oxide gas, condensing and shaping to obtain the silicon oxide SiO_{y}, wherein 0<y<2.

As an optional technical solution of the present application, the raw material of the silicon oxide includes Si and SiO₂. And the specific ratio of Si and SiO₂ can be adjusted according to the required y value of SiO_{y}, and is not limited here.

As an optional technical solution in the present application, the mass ratio of silicon to silicon dioxide is 1:(1.8-2.2), for example but not limited to 1:1.8, 1:1.9, 1:2.0, 1:2.1 or 1:2.2, etc., and other unlisted values within this numerical range are also applicable.

The temperature of the heating is 1200°C-1400°C, for example but not limited to 1200°C, 1250°C, 1300°C, 1350°C or 1400°C, etc., and other unlisted values within the numerical range are also applicable.

Optionally, the time of the heating gasification is 16h-20h, for example but not limited to, 16h, 17h, 18h, 19h or 20h, etc., and other unlisted values within the numerical range are also applicable.

Optionally, the temperature of the condensation is 930°C-970°C, for example but not limited to 930°C, 940°C, 950°C, 960°C or 970°C, etc., and other unlisted values within the numerical range are also applicable.

Optionally, the shaping includes at least one of crushing, ball milling or grading.

As an optional technical solution in the present application, silicon oxide SiO_{y} particles meets D10>1.0µm and Dmax <50µm, for example, D10 is 1.1µm, 1.5µm, 2.0µm, 2.5µm, 3.0µm, 4.0µm or 5.0µm, and Dmax is 49µm, 45µm, 30µm, 35µm or 20 µ m. It should be noted that Dmax refers to the particle size of the largest particle.

Preferably, the heating gasification is carried out in a protective atmosphere or vacuum. In the present application, the protective atmosphere can be selected according to the prior art, such as nitrogen atmosphere and/or argon atmosphere. The vacuum degree of the vacuum can be selected according to the prior art, for example, 5Pa.

Furthermore, the method further includes:

Performing carbon coating on a material to be coated with carbon, wherein the material to be coated with carbon includes at least one of the silicon oxide and the anode material; the carbon coating includes at least one of gas-phase carbon coating and solid-phase carbon coating.

As an optional technical solution of the present application, when the gas-phase carbon coating is adopted, the silicon oxide is heated to 600°C-1000°C, such as 600°C, 700°C, 800°C, 900°C or 1000°C, etc., in a protective atmosphere, and an organic carbon source gas is introduced, keeping the temperature for 0.5h-10h, such as for 0.5h, 1h, 2h, 5h, 8h or 10h, etc., and then cooled. In the present application, the protective atmosphere can be selected according to the prior art, such as nitrogen atmosphere and/or argon atmosphere.

Preferably, the organic carbon source gas includes hydrocarbons. The hydrocarbons include at least one of methane, ethylene, acetylene and benzene.

As an optional technical solution of the present application, when the solid-phase carbon coating is adopted, the silicon oxide and a carbon source are blended for 0.5h or more, and then the obtained carbon mixture is carbonized at 600°C-1000°C for 2h-6h, and cooled. The blending time is 0.5h or more, such as 0.5h, 0.6h, 0.7h, 0.8h, 1h, 1.5h or 2h, the carbonization temperature can be 600°C, 700°C, 800°C, 900°C or 1000°C, and the carbonization time can be, for example, 2h, 3h, 4h, 5h or 6h.

Understandably, the silicon oxide is coated with carbon firstly and then subjected to a lithiation reaction, which can effectively simplify the preparation process and reduce the cost. In addition, a carbon layer is formed on the surface of the silicon oxide, and the carbon layer is relatively loose and has a large number of micropores, so that subsequent the reducing lithium-containing compound can pass through the micropores of the carbon layer, permeate through the carbon layer and react on the surface of the silicon oxide, which can appropriately inhibit the severity of the reaction, so that a uniform Li₂Si₂O₅ layer is formed on the surface of the silicon oxide, and the electrochemical performance of the material is improved.

Optionally, the blending is performed in a blender, and the rotational speed of the blender is 500r/min-3000r/min, such as 500r/min, 1000r/min, 1500r/min, 2000r/min, 2500r/min or 3000r/min. The width of the blade gap of the blender can be selected according to the prior art, for example, 0.5cm.

In some embodiments, the carbon source includes at least one of polymer, saccharide, organic acid and asphalt.

In the present application, the operation conditions such as the carbonization temperature, time and blending are mutually coordinating, which is beneficial to the formation of a carbon layer on the surface of the silicon oxide. The carbon layer is relatively loose and has a large number of micropores, so that subsequent the reducing lithium-containing compounds can pass through the micropores of the carbon layer and permeate through the carbon layer to react on the surface of silicon oxide. Therefore, the carbon layer is still located at the outermost layer in the obtained anode material, which can better improve the performance of the product.

Furthermore, as a further preferred technical solution of the preparation method described in the present application, the method includes the following steps:
heating and gasifying silicon and silicon dioxide in a mass ratio of 1: (1.8 - 2.2) at 1200°C-1400°C in vacuum for 16h-20h, condensing at 930°C-970°C, and shaping to obtain silicon monoxide;
performing carbon coating on the silicon monoxide to obtain carbon-coated silicon monoxide; and
mixing the carbon-coated silicon oxide and phosphorus pentoxide according to a mass ratio of 100: (2-10), adding a reducing lithium-containing compound and mixing, and roasting at 450 °C -800°C for 1.5h-2.5h in a non-oxidizing atmosphere to obtain an anode material; wherein the mass ratio of the carbon-coated silicon monoxide to the reducing lithium-containing compound is 10: (0.08-1.2).

In a third aspect, the present application provides a lithium ion battery, including the silicon-oxygen composite anode material described in the first aspect or the silicon-oxygen composite anode material prepared by the preparation method described in the second aspect.

The following examples are divided into several examples to further explain the embodiments of the present application. The embodiments of the present application are not limited to the following specific embodiments. Within the scope of protection, modifications can be properly implemented.

### Example 1

In this example, the anode material was prepared as follows:
(1) 1kg of Si powder and 2kg of SiO₂ powder were fed into a VC mixer and mixed for 30min to obtain a mixture of SiO₂ and Si; the mixture was put into a vacuum furnace, heated to 1300°C while keeping the temperature for 18h under the negative pressure of 5Pa; the SiO steam generated in the furnace was rapidly condensed (the condensation temperature was 950°C) to form a SiO block; after treatment such as crushing, ball milling and grading of the SiO block, a SiO powder material were obtained, wherein the median particle size was controlled at about 6µm (D10 was 1.2µm, Dmax was 28µm).
(2) 1kg of the SiO powder material and 20g of phosphorus pentoxide were fed into a VC mixer, mixed for 40min, and then taken out to obtain a mixture of SiO and phosphorus pentoxide; then the mixture was put into a ball mill tank, 100g of lithium hydride was added for ball milling for 20min, and then taken out to obtain a pre-lithiated precursor; the pre-lithiated precursor was subjected to heat treatment under nitrogen protection at 800°C for 2h, and then naturally cooled to room temperature;, taken out, sieved and demagnetized to obtain an anode material.

The anode material prepared in this example included SiO_{0.8} and Li₂Si₂O₅, and the SiO_{0.8} was uniformly dispersed in Li₂Si₂O₅. In the anode material, the mass ratio of SiO_{0.8} to Li₂Si₂O₅ was 1: 2.6. The pH value of the anode material was 10.5.

The conventional performance test results of the anode material prepared in this example are shown in Table 1 and the electrochemical performance test results are shown in Table 2.

### Example 2

In this example, the anode material was prepared as follows:
(1) 1kg of Si powder and 2kg of SiO₂ powder were fed into a VC mixer and mixed for 30min to obtain a mixture of SiO₂ and Si; the mixture was put into a vacuum furnace, heated to 1300°C while keeping the temperature for 18h under the negative pressure of 5Pa; the SiO steam generated in the furnace was rapidly condensed (the condensation temperature was 950°C) to form a SiO block; after treatment such as crushing, ball milling and grading of the SiO block, a SiO powder material were obtained, wherein the median particle size was controlled at about 6µm (D10 was 1.3µm, Dmax was 25µm).
(2) 1.5kg of the SiO powder material was placed in CVD rotary furnace, acetylene was introduced as a carbon source, nitrogen was introduced as protective gas. A deposition process was conducted at 800°C for 70min, then cooled and output to obtain a SiO/C material.
(3) 1kg of the SiO/C material and 20g of phosphorus pentoxide were fed into a VC mixer, mixed for 40min, and then taken out to obtain a mixture of SiO/C and phosphorus pentoxide; then the mixture was put into a ball mill tank, 100g of lithium hydride was added for ball milling for 20min, and then taken out to obtain a pre-lithiated precursor; the pre-lithiated precursor was subjected to heat treatment under nitrogen protection at 800°C for 2h, and then naturally cooled to room temperature, taken out, sieved and demagnetized to obtain an anode material.

The anode material prepared in this example included SiO_{0.8} and Li₂Si₂O₅, and the SiO_{0.8} was uniformly dispersed in Li₂Si₂O₅. In the anode material, the mass ratio of SiO_{0.8} to Li₂Si₂O₅ was1: 2.1. The pH value of the anode material was 10.2. The surface of the anode material was coated with a carbon layer with a thickness of 205nm.

FIG. 2 is a XRD pattern of the anode material prepared in this example, from which it can be seen that there are only the characteristic peaks of the substances Li₂Si₂O₅ and silicon.

FIG. 3a is a gas production test photograph of the anode material prepared in this example, from which it can be seen from this photograph that the aluminum-plastic film bag has no bulge or protrusion and the surface is flat, indicating that the material does not produce gas.

FIG. 3b is a coating test photograph of the anode material prepared in this example, from which it can be seen that the polar plate is smooth and flat.

The conventional performance test results of the anode material prepared in this example are shown in Table 1 and the electrochemical performance test results are shown in Table 2.

### Example 3

(1) 1kg of Si powder and 2kg of SiO₂ powder were fed into a VC mixer and mixed for 30min to obtain a mixture of SiO₂ and Si; the mixture was put into a vacuum furnace, heated to 1300°C while keeping the temperature for 18h under the negative pressure of 5Pa; the SiO steam generated in the furnace was rapidly condensed (the condensation temperature was 950°C) to form a SiO block; after treatment such as crushing, ball milling and grading of the SiO block, a SiO powder material were obtained, wherein the median particle size was controlled at about 6µm (D10 was 1.3µm, Dmax was 25µm).
(2) 1.5kg of the SiO powder material was placed in CVD rotary furnace, acetylene was introduced as a carbon source, nitrogen was introduced as protective gas. A deposition process was conducted at 800°C for 70min, then cooled and output to obtain a SiO/C material.
(3) 1kg of the SiO/C material and 30g of phosphorus pentoxide were fed into a VC mixer, mixed for 40min, and then taken out to obtain a mixture of SiO/C and phosphorus pentoxide; then the mixture was put into a ball mill tank, 120g of lithium hydride was added for ball milling for 20min, and then taken out to obtain a pre-lithiated precursor; the pre-lithiated precursor was subjected to heat treatment under nitrogen protection at 800°C for 2h, and then naturally cooled to room temperature, taken out, sieved and demagnetized to obtain an anode material.

The anode material prepared in this example included SiO_{0.5} and Li₂Si₂O₅, and the SiO_{0.5} was uniformly dispersed in Li₂Si₂O₅. In the anode material, the mass ratio of SiO_{0.5} to Li₂Si₂O₅ was 1: 1.4. The pH value of the anode material was 10.3. The surface of the anode material was coated with a carbon layer with a thickness of 200nm.

The conventional performance test results of the anode material prepared in this example are shown in Table 1 and the electrochemical performance test results are shown in Table 2.

### Example 4

In this example, the anode material was prepared as follows:
(1) 1kg of Si powder and 2kg of SiO₂ powder were fed into a VC mixer and mixed for 30min to obtain a mixture of SiO₂ and Si; the mixture was put into a vacuum furnace, heated to 1300°C while keeping the temperature for 18h under the negative pressure of 5Pa; the SiO steam generated in the furnace was rapidly condensed (the condensation temperature was 950°C) to form a SiO block; after treatment such as crushing, ball milling and grading of the SiO block, a SiO powder material were obtained, wherein the median particle size was controlled at about 6µm (D10 was 1.5µm, Dmax was 29µm).
(2) 1.5kg of the SiO powder material and 113g of asphalt were placed in a VC mixer and mixed for 30min with a rotating speed of 800rpm, output and then placed in a high-temperature box furnace which was introduced nitrogen for protection, fired at 900°C for 3h, naturally cooled to room temperature and output to obtain a SiO/C material.
(3) 1kg of the SiO/C material and 20g of phosphorus pentoxide were fed into a VC mixer, mixed for 40min, and then taken out to obtain a mixture of SiO/C and phosphorus pentoxide; then the mixture was put into a ball mill tank, 100g of lithium hydride was added for ball milling for 20min, and then taken out to obtain a pre-lithiated precursor; the pre-lithiated precursor was subjected to heat treatment under nitrogen protection at 800°C for 2h, and then naturally cooled to room temperature, taken out, sieved and demagnetized to obtain an anode material.

The anode material prepared in this example included SiO_{0.86} and Li₂Si₂O₅, and the SiO_{0.86} was uniformly dispersed in Li₂Si₂O₅. In the anode material, the mass ratio of SiO_{0.86} to Li₂Si₂O₅ was 1: 2.2. The pH value of the anode material was 10.0. The surface of the anode material was coated with a carbon layer with a thickness of 220nm.

The conventional performance test results of the anode material prepared in this example are shown in Table 1 and the electrochemical performance test results are shown in Table 2.

### Example 5

In this example, the anode material was prepared as follows:
(1) 1kg of Si powder and 1.8kg of SiO₂ powder were fed into a VC mixer and mixed for 30min to obtain a mixture of SiO₂ and Si; the mixture was put into a vacuum furnace, heated to 1200°C while keeping the temperature for 20h under the negative pressure of 5Pa; the SiO steam generated in the furnace was rapidly condensed (the condensation temperature was 930°C) to form a SiO_{0.92} block; after treatment such as crushing, ball milling and grading of the SiO_{0.92} block, a SiO_{0.92} powder material were obtained, wherein the median particle size was controlled at about 6µm (D10 was 1.5µm, Dmax was 26µm).
(2) 1.5kg of the SiO_{0.92} powder material was placed in CVD rotary furnace, methane was introduced as a carbon source, nitrogen was introduced as protective gas. A deposition process was conducted at 600°C for 1h, then cooled and output to obtain a SiO_{0.92}/C material.
(3) 1kg of the SiO_{0.92}/C material and 70g of phosphorus pentoxide were fed into a VC mixer, mixed for 40min, and then taken out to obtain a mixture of SiO_{0.92}/C and phosphorus pentoxide; then the mixture was put into a ball mill tank, 100g of lithium hydride was added for ball milling for 20min, and then taken out to obtain a pre-lithiated precursor; the pre-lithiated precursor was subjected to heat treatment under nitrogen protection at 600°C for 2h, and then naturally cooled to room temperature, taken out, sieved and demagnetized to obtain an anode material.

The anode material prepared in this example included SiO_{0.7} and Li₂Si₂O₅, and the SiO_{0.7} was uniformly dispersed in Li₂Si₂O₅. In the anode material, the mass ratio of SiO_{0.7} to Li₂Si₂O₅ was 1: 2.0. The pH value of the anode material was 10.6. The surface of the anode material was coated with a carbon layer with a thickness of 199nm.

The conventional performance test results of the anode material prepared in this example are shown in Table 1 and the electrochemical performance test results are shown in Table 2.

### Example 6

In this example, the anode material was prepared as follows:
(1) 1kg of Si powder and 2.2kg of SiO₂ powder were fed into a VC mixer and mixed for 30min to obtain a mixture of SiO₂ and Si; the mixture was put into a vacuum furnace, heated to 1400°C while keeping the temperature for 16h under the negative pressure of 5Pa; the SiO steam generated in the furnace was rapidly condensed (the condensation temperature was 970°C) to form a SiO_{1.3} block; after treatment such as crushing, ball milling and grading of the SiO_{1.3} block, a SiO_{1.3} powder material were obtained, wherein the median particle size was controlled at about 6µm (D10 was 1.6µm, Dmax was 25µm).
(2) 1.5kg of the SiO_{1.3} powder material was placed in CVD rotary furnace, ethylene was introduced as a carbon source, nitrogen was introduced as protective gas. A deposition process was conducted at 1000°C for 30min, then cooled and output to obtain a SiO_{1.3}/C material.
(3) 1kg of the SiO_{1.3}/C material and 100g of phosphorus pentoxide were fed into a VC mixer, mixed for 40min, and then taken out to obtain a mixture of SiO_{1.3}/C and phosphorus pentoxide; then the mixture was put into a ball mill tank, 100g of lithium hydride was added for ball milling for 20min, and then taken out to obtain a pre-lithiated precursor; the pre-lithiated precursor was subjected to heat treatment under nitrogen protection at 450°C for 2h, and then naturally cooled to room temperature, taken out, sieved and demagnetized to obtain an anode material.

The anode material prepared in this example included SiO_{1.2} and Li₂Si₂O₅, and the SiO_{1.2} was uniformly dispersed in Li₂Si₂O₅. In the anode material, the mass ratio of SiO_{1.2} to Li₂Si₂O₅ was 1: 2.1. The pH value of the anode material was 9.8. The surface of the anode material was coated with a carbon layer with a thickness of 204nm.

The conventional performance test results of the anode material prepared in this example are shown in Table 1 and the electrochemical performance test results are shown in Table 2.

### Example 7

In this example, the anode material was prepared as follows:
(1) 1kg of Si powder and 2kg of SiO₂ powder were fed into a VC mixer and mixed for 30min to obtain a mixture of SiO₂ and Si; the mixture was put into a vacuum furnace, heated to 1300°C while keeping the temperature for 18h under the negative pressure of 5Pa; the SiO steam generated in the furnace was rapidly condensed (the condensation temperature was 950°C) to form a SiO block; after treatment such as crushing, ball milling and grading of the SiO block, a SiO powder material were obtained, wherein the median particle size was controlled at about 6µm (D10 was 1.1µm, Dmax was 27µm).
(2) 1.5 kg of the SiO powder material and 113g of asphalt were placed in a VC mixer and mixed for 40min with a rotating speed of 500rpm, output and then placed in a high-temperature box furnace which was introduced nitrogen for protection, fired at 600°C for 6h, naturally cooled to room temperature and output to obtain a SiO/C material.
(3) 1kg of the SiO/C material and 20g of phosphorus pentoxide were fed into a VC mixer, mixed for 40min, and then taken out to obtain a mixture of SiO/C and phosphorus pentoxide; then the mixture was put into a ball mill tank, 120g of lithium borohydride was added for ball milling for 20min, and then taken out to obtain a pre-lithiated precursor; the pre-lithiated precursor was subjected to heat treatment under nitrogen protection at 300°C for 2.5h, and then naturally cooled to room temperature, taken out, sieved and demagnetized to obtain an anode material.

The anode material prepared in this example included SiO_{0.6} and Li₂Si₂O₅, and the SiO_{0.6} was uniformly dispersed in Li₂Si₂O₅. In the anode material, the mass ratio of SiO_{0.6} to Li₂Si₂O₅ was 1: 3.0. The pH value of the anode material was 10.2. The surface of the anode material was coated with a carbon layer with a thickness of 210nm.

The conventional performance test results of the anode material prepared in this example are shown in Table 1 and the electrochemical performance test results are shown in Table 2.

### Example 8

In this example, the anode material was prepared as follows:

(1) 1kg of Si powder and 2kg of SiO₂ powder were fed into a VC mixer and mixed for 30min to obtain a mixture of SiO₂ and Si; the mixture was put into a vacuum furnace, heated to 1300°C while keeping the temperature for 18h under the negative pressure of 5Pa; the SiO steam generated in the furnace was rapidly condensed (the condensation temperature was 950°C) to form a SiO block; after treatment such as crushing, ball milling and grading of the SiO block, a SiO powder material were obtained, wherein the median particle size was controlled at about 6µm (D10 was 1.5µm, Dmax was 26µm).

(2) 1.5 kg of the SiO powder material and 113g of asphalt were placed in a VC mixer and mixed for 50min with a rotating speed of 3000rpm, output and then placed in a high-temperature box furnace which was introduced nitrogen for protection, fired at 1000°C for 2h, naturally cooled to room temperature and output to obtain a SiO/C material.

(3) 1kg of the SiO/C material and 20g of phosphorus pentoxide were fed into a VC mixer, mixed for 40min, and then taken out to obtain a mixture of SiO/C and phosphorus pentoxide; then the mixture was put into a ball mill tank, 150g of metallic lithium was added for ball milling for 20min, and then taken out to obtain a pre-lithiated precursor; the pre-lithiated precursor was subjected to heat treatment under nitrogen protection at 1000°C for 1.5h, and then naturally cooled to room temperature, taken out, sieved and demagnetized to obtain an anode material.

The anode material prepared in this example included SiO_{0.2} and Li₂Si₂O₅, and the SiO_{0.2} was uniformly dispersed in Li₂Si₂O₅. In the anode material, the mass ratio of SiO_{0.2} to Li₂Si₂O₅ was 1: 1.6. The pH value of the anode material was 10.6. The surface of the anode material was coated with a carbon layer with a thickness of 198nm.

The conventional performance test results of the anode material prepared in this example are shown in Table 1 and the electrochemical performance test results are shown in Table 2.

### Example 9

In this example, the anode material was prepared as follows:
(1) 1kg of Si powder and 2kg of SiO₂ powder were fed into a VC mixer and mixed for 30min to obtain a mixture of SiO₂ and Si; the mixture was put into a vacuum furnace, heated to 1300°C while keeping the temperature for 18h under the negative pressure of 5Pa; the SiO steam generated in the furnace was rapidly condensed (the condensation temperature was 950°C) to form a SiO block; after treatment such as crushing, ball milling and grading of the SiO block, a SiO powder material were obtained, wherein the median particle size was controlled at about 6µm (D10 was 1.5µm, Dmax was 29µm).
(2) 1.5 kg of the SiO powder material and 113g of asphalt were placed in a VC mixer and mixed for 30min with a rotating speed of 800rpm, output and then placed in a high-temperature box furnace which was introduced nitrogen for protection, fired at 900°C for 3h, naturally cooled to room temperature and output to obtain a SiO/C material.
(3) 1kg of the SiOy/C material and 20g of phosphorus pentoxide were fed into a VC mixer, mixed for 40min, and then taken out to obtain a mixture of SiO/C and phosphorus pentoxide; then the mixture was put into a ball mill tank, 100g of lithium hydride was added for ball milling for 20min, and then taken out to obtain a pre-lithiated precursor; the pre-lithiated precursor was subjected to heat treatment under nitrogen protection at 800°C for 2h, and then naturally cooled to room temperature, taken out, sieved and demagnetized to obtain an anode material.

The anode material prepared in this example included SiO_{0.9} and Li₂Si₂O₅, and the SiO_{0.9} was uniformly dispersed in Li₂Si₂O₅. In the anode material, the mass ratio of SiO_{0.9} to Li₂Si₂O₅ was 1: 2.3. The pH value of the anode material was 10.1. The surface of the anode material was coated with a carbon layer with a thickness of 207nm.

The conventional performance test results of the anode material prepared in this example are shown in Table 1 and the electrochemical performance test results are shown in Table 2.

### Example 10

In this example, the anode material was prepared as follows:
(1) 1kg of Si powder and 2kg of SiO₂ powder were fed into a VC mixer and mixed for 30min to obtain a mixture of SiO₂ and Si; the mixture was put into a vacuum furnace, heated to 1300°C while keeping the temperature for 18h under the negative pressure of 5Pa; the SiO steam generated in the furnace was rapidly condensed (the condensation temperature was 950°C) to form a SiO block; after treatment such as crushing, ball milling and grading of the SiO block, a SiO powder material were obtained, wherein the median particle size was controlled at about 6µm (D10 was 1.5µm, Dmax was 29µm).
(2) 1.5 kg of the SiO powder material and 113g of asphalt were placed in a VC mixer and mixed for 30min with a rotating speed of 800rpm, output and then placed in a high-temperature box furnace which was introduced nitrogen for protection, fired at 900°C for 3h, naturally cooled to room temperature and output to obtain a SiO/C material.
(3) 1kg of the SiO/C material and 20g of lithium phosphate were fed into a VC mixer, mixed for 40min, and then taken out to obtain a mixture of SiO/C and lithium phosphate; then the mixture was put into a ball mill tank, 100g of lithium hydride was added for ball milling for 20min, and then taken out to obtain a pre-lithiated precursor; the pre-lithiated precursor was subjected to heat treatment under nitrogen protection at 800°C for 2h, and then naturally cooled to room temperature, taken out, sieved and demagnetized to obtain an anode material.

The anode material prepared in this example included SiO_{0.92} and Li₂Si₂O₅, and the SiO_{0.92} was uniformly dispersed in Li₂Si₂O₅. In the anode material, the mass ratio of SiO_{0.92} to Li₂Si₂O₅ was 1: 2.9. The pH value of the anode material was 9.9. The surface of the anode material was coated with a carbon layer with a thickness of 250nm.

The conventional performance test results of the anode material prepared in this example are shown in Table 1 and the electrochemical performance test results are shown in Table 2.

### Example 11.

In this example, the anode material was prepared as follows:
(1) 1kg of Si powder and 2kg of SiO₂ powder were fed into a VC mixer and mixed for 30min to obtain a mixture of SiO₂ and Si; the mixture was put into a vacuum furnace, heated to 1300°C while keeping the temperature for 18h under the negative pressure of 5Pa; the SiO steam generated in the furnace was rapidly condensed (the condensation temperature was 950°C) to form a SiO block; after treatment such as crushing, ball milling and grading of the SiO block, a SiO powder material were obtained, and the median particle size was controlled at about 6µm (D10 was 1.3µm, Dmax was 25µm).
(2) 1.5kg of the SiO powder material was placed in CVD rotary furnace, acetylene was introduced as a carbon source, nitrogen was introduced as protective gas. A deposition process was conducted at 800°C for 70min, then cooled and output to obtain a SiO/C material.
(3) 1kg of the SiO/C material and 8g of NaCl were fed into a VC mixer, mixed for 40min, and then taken out to obtain a mixture of SiO/C and NaCl; then the mixture was put into a ball mill tank, 100g of lithium hydride was added for ball milling for 20min to obtain a pre-lithiated precursor; the pre-lithiated precursor was subjected to heat treatment under nitrogen protection at 800°C for 2h, and then naturally cooled to room temperature, taken out, sieved and demagnetized to obtain an anode material.

The anode material prepared in this example included SiO_{0.9} and Li₂Si₂O₅, and the SiO_{0.9} was uniformly dispersed in Li₂Si₂O₅. In the anode material, the mass ratio of SiO_{0.9} to Li₂Si₂O₅ was 1: 3.5. The pH value of the anode material was 10.3. The surface of the anode material was coated with a carbon layer with a thickness of 180nm.

The conventional performance test results of the anode material prepared in this example are shown in Table 1 and the electrochemical performance test results are shown in Table 2.

### Example 12

In this example, the anode material was prepared as follows:
(1) 1kg of Si powder and 2kg of SiO₂ powder were fed into a VC mixer and mixed for 30min to obtain a mixture of SiO₂ and Si; the mixture was put into a vacuum furnace, heated to 1300°C while keeping the temperature for 18h under the negative pressure of 5Pa; the SiO steam generated in the furnace was rapidly condensed (the condensation temperature was 950°C) to form a SiO block; after treatment such as crushing, ball milling and grading of the SiO block, a SiO powder material were obtained, wherein the median particle size was controlled at about 6µm (D10 was 1.3µm, Dmax was 25µm).
(2) 1.5kg of the SiO powder material was placed in CVD rotary furnace, acetylene was introduced as a carbon source, nitrogen was introduced as protective gas. A deposition process was conducted at 800°C for 70min, then cooled and output to obtain a SiO/C material.
(3) 1kg of the SiO/C material and 30g of NaCl were fed into a VC mixer, mixed for 40min, and then taken out to obtain a mixture of SiO/C and NaCl; then the mixture was put into a ball mill tank, 100g of lithium hydride was added for ball milling for 20min, and then taken out to obtain a pre-lithiated precursor; the pre-lithiated precursor was subjected to heat treatment under nitrogen protection at 800°C for 2h, and then naturally cooled to room temperature, taken out, sieved and demagnetized to obtain an anode material.

The anode material prepared in this example included SiO_{0.3} and Li₂Si₂O₅, and the SiO_{0.3} was uniformly dispersed in Li₂Si₂O₅. In the anode material, the mass ratio of SiO_{0.3} to Li₂Si₂O₅ was 1: 0.2. The pH value of the anode material was 10.3. The surface of the anode material was coated with a carbon layer with a thickness of 800nm.

The conventional performance test results of the anode material prepared in this example are shown in Table 1 and the electrochemical performance test results are shown in Table 2.

### Comparative example 1

(1) 1kg of Si powder and 2kg of SiO₂ powder were fed into a VC mixer and mixed for 30min to obtain a mixture of SiO₂ and Si; the mixture was put into a vacuum furnace, heated to 1300°C while keeping the temperature for 18h under the negative pressure of 5Pa; the SiO steam generated in the furnace was rapidly condensed (the condensation temperature was 950°C) to form a SiO block; after treatment such as crushing, ball milling and grading of the SiO block, a SiO powder material were obtained, and the median particle size was controlled at about 6µm (D10 was 1.2µm, Dmax was 28µm).
(2) 1kg of the SiO powder material and 20g of phosphorus pentoxide were taken to obtain a mixture of SiO and phosphorus pentoxide; then the mixture was put into a ball mill tank, 100g of lithium hydride was added for ball milling for 20min, and then taken out to obtain a pre-lithiated precursor; the pre-lithiated precursor was subjected to heat treatment under nitrogen protection at 800°C for 2h, and then naturally cooled to room temperature, taken out, sieved and demagnetized to obtain an anode material.

The anode material prepared in this example included SiO_{0.8}, Li₂SiO₃ and Li₂Si₂O₅, and the SiO_{0.8} was uniformly dispersed in Li₂Si₂O₅. In the anode material, the mass ratio of SiO_{0.8} to Li₂Si₂O₅ was 1: 2.6. The pH value of the anode material was 11.3.

The conventional performance test results of the anode material prepared in this comparative example are shown in Table 1 and the electrochemical performance test results are shown in Table 2.

### Comparative example 2

In this example, the anode material was prepared as follows:
(1) 1kg of Si powder and 2kg of SiO₂ powder were fed into a VC mixer and mixed for 30min to obtain a mixture of SiO₂ and Si; the mixture was put into a vacuum furnace, heated to 1300°C while keeping the temperature for 18h under the negative pressure of 5Pa; the SiO steam generated in the furnace was rapidly condensed (the condensation temperature was 950°C) to form a SiO block; after treatment such as crushing, ball milling and grading of the SiO block, a SiO powder material were obtained, wherein the median particle size was controlled at about 6µm (D10 was 1.5µm, Dmax was 29µm).
(2) 1.5 kg of the SiO powder material and 113g of asphalt were placed in a VC mixer and mixed for 30min with a rotating speed of 800rpm, output and then placed in a high-temperature box furnace which was introduced nitrogen for protection, fired at 900°C for 3h, naturally cooled to room temperature and output to obtain a SiO/C material.
(3) 1kg of the SiO/C material and 20g of phosphorus pentoxide were taken to obtain a mixture of SiO/C and phosphorus pentoxide; then the mixture was put into a ball mill tank, 100g of lithium hydride was added for ball milling for 20min, and then taken out to obtain a pre-lithiated precursor; the pre-lithiated precursor was subjected to heat treatment under nitrogen protection at 800°C for 2h, and then naturally cooled to room temperature, taken out, sieved and demagnetized to obtain an anode material.

The anode material prepared in this example included SiO_{0.86}, Li₂SiO₃ and Li₂Si₂O₅, and the SiO_{0.86} was uniformly dispersed in Li₂Si₂O₅. In the anode material, the mass ratio of SiO_{0.86} to Li₂Si₂O₅ was 1: 2.2. The pH value of the anode material was 11.2. The surface of the anode material was coated with a carbon layer with a thickness of 220nm.

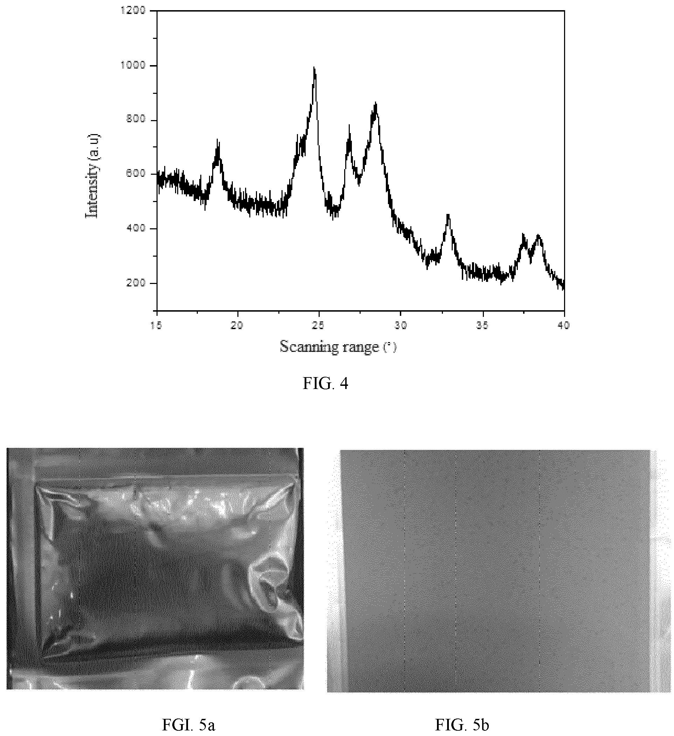

FIG. 4 is a XRD spectrum of the anode material prepared by the comparative example, from which it can be seen that in addition to the characteristic peaks of silicon and Li₂Si₂O₅, there is also the characteristic peak of Li₂SiO₃ in the spectrum.

FIG. 5a is a gas production test photograph of the anode material prepared by the comparative example, from which it can be seen that the sealed aluminum-plastic film bag bulges, indicating that gas production occurs inside.

FIG. 5b is a coating test photograph of the anode material prepared by the comparative example, from which it can be seen that pinholes are all over the polar plate.

The conventional performance test results of the anode material prepared in this comparative example are shown in Table 1, and the electrochemical performance test results are shown in Table 2.

### Comparative example 3

In this example, the anode material was prepared as follows:
(1) 1kg of Si powder and 2kg of SiO₂ powder were fed into a VC mixer and mixed for 30min to obtain a mixture of SiO₂ and Si; the mixture was put into a vacuum furnace, heated to 1300°C while keeping the temperature for 18h under the negative pressure of 5Pa; the SiO steam generated in the furnace was rapidly condensed (the condensation temperature was 950°C) to form a SiO block; after treatment such as crushing, ball milling and grading of the SiO block, a SiO powder material were obtained, wherein the median particle size was controlled at about 6µm (D10 was 1.3µm, Dmax was 25µm).
(2) 1.5kg of the SiO powder material was placed in CVD rotary furnace, acetylene was introduced as a carbon source, nitrogen was introduced as protective gas. A deposition process was conducted at 800°C for 70min, then cooled and output to obtain a SiO/C material.
(3) 1kg of the SiO/C material and 5g of phosphorus pentoxide were fed into a VC mixer, mixed for 40min, and then taken out to obtain a mixture of SiO/C and phosphorus pentoxide; then the mixture was put into a ball mill tank, 100g of lithium hydride was added for ball milling for 20min, and then taken out to obtain a pre-lithiated precursor; the pre-lithiated precursor was subjected to heat treatment under nitrogen protection at 800°C for 2h, and then naturally cooled to room temperature, taken out, sieved and demagnetized to obtain an anode material.

The anode material prepared in this example included SiO_{0.95} and Li₂Si₂O₅, and the SiO_{0.95} was uniformly dispersed in Li₂Si₂O₅. In the anode material, the mass ratio of SiO_{0.9} to Li₂Si₂O₅ was 1: 6.1. The pH value of the anode material was 11.0. The surface of the anode material was coated with a carbon layer with a thickness of 200nm.

The conventional performance test results of the anode material prepared in this comparative example are shown in Table 1, and the electrochemical performance test results are shown in Table 2.

### Comparative example 4

In this example, the anode material was prepared as follows:
(1) 1kg of Si powder and 2kg of SiO₂ powder were fed into a VC mixer and mixed for 30min to obtain a mixture of SiO₂ and Si; the mixture was put into a vacuum furnace, heated to 1300°C while keeping the temperature for 18h under the negative pressure of 5Pa; the SiO steam generated in the furnace was rapidly condensed (the condensation temperature was 950°C) to form a SiO block; after treatment such as crushing, ball milling and grading of the SiO block, a SiO powder material were obtained, wherein the median particle size was controlled at about 6µm (D10 was 1.3µm, Dmax was 25µm).
(2) 1.5kg of the SiO powder material was placed in CVD rotary furnace, acetylene was introduced as a carbon source, nitrogen was introduced as protective gas. A deposition process was conducted at 800°C for 70min, then cooled and output to obtain a SiO/C material.
(3) 1kg of the SiO/C material and 10g of phosphorus pentoxide were fed into a VC mixer, mixed for 40min, and then taken out to obtain a mixture of SiO/C and phosphorus pentoxide; then the mixture was put into a ball mill tank, 100g of lithium hydride was added for ball milling for 20min, and then taken out to obtain a pre-lithiated precursor; the pre-lithiated precursor was subjected to heat treatment under nitrogen protection at 800°C for 2h, and then naturally cooled to room temperature, taken out, sieved and demagnetized to obtain an anode material.

The anode material prepared in this example included SiO_{0.88} and Li₂Si₂O₅, and the SiO_{0.88} was uniformly dispersed in Li₂Si₂O₅. In the anode material, the mass ratio of SiO_{0.88} to Li₂Si₂O₅ was 1: 5.0. The pH value of the anode material was 11.1. The surface of the anode material was coated with a carbon layer with a thickness of 190nm.

The conventional performance test results of the anode material prepared in this comparative example are shown in Table 1, and the electrochemical performance test results are shown in Table 2.

### Test method

### 1. XRD test:

10wt% magnesium oxide was added as a standard substance, which was uniformly mixed into the anode materials to be tested prepared in each examples and comparative examples, and then tabletted and tested. Angle range: 10° - 90°, scan mode: step scanning, selecting a slit width of 1.0, setting a voltage of 40kW and a current of 40mA. The relative content of each component was calculated by Jade6.5.

### 2. Processing performance test

(1) Gas production test. The anode materials prepared in each examples or comparative examples were used respectively as active materials, SBR+CMC was used as a binder, conductive carbon black was added, and the mixture was stirred and mixed uniformly at a high speed according to the ratio of the active material: the conductive agent: the binder =95:2:3 to obtain a slurry, which was put into an aluminum-plastic film bag for sealing and standing, and then the shape change of the aluminum-plastic film bag was monitored for one month.
(2) Coating test. The slurry prepared in the gas production test was uniformly coated on the copper foil, and whether there were pinholes, pores and pits on the surface of the polar plate after drying was observed.

### 3. Button battery test

The anode materials prepared in each examples or comparative examples were used respectively as active material, SBR+CMC was used as a binder, conductive carbon black was added, and then stirred, prepared slurry and coated on copper foil. Finally, anode plates were prepared by drying and rolling, wherein the ratio of the active material: the conductive agent: the binder was 85: 15: 10. With a lithium metal sheet as a counter electrode, PP/PE as a separator, LiPF6/EC+DEC+DMC (the volume ratio of EC, DEC and DMC was 1:1:1) as an electrolyte, the dummy batteries were assembled in a glove box filled with argon gas. The electrochemical performance of the button batteries was tested by a LAND 5V/10mA battery tester, wherein the charging voltage was 1.5V, discharging to 0.01V, and the charging and discharging rate was 0.1C.

### 4. Cycle test

The anode materials prepared in each examples or comparative examples were respectively mixed evenly with graphite according to the mass ratio of 1: 9, and then used as active substances. With lithium metal sheet as a counter electrode, PP/PE as a diaphragm, LiPF6/EC+DEC+DMC (the volume ratio of EC, DEC and DMC was 1:1:1) as an electrolyte., the button batteries were assembled in a glove box filled with argon gas. The electrochemical performance of the battery after 50 cycles was tested by a LAND 5V/10mA battery tester, wherein the charging voltage was 1.5V, discharging to 0.01V, and the charging and discharging rate was 0.1C.

The results of the above tests are shown in Tables 1 and 2.

**Table 1**

| Sample | Wheth er coated with carbon | carbon source | Carbon content wt% | Addition amount of the nucleating conversion agent wt% | Addition amount of the heat absorbent wt% | Content of Li₂SiO₃ wt% | Content of Li₂Si₂O₅ wt%. | Processability | |
|---|---|---|---|---|---|---|---|---|---|
| | | | | | | | | Gas generati on | Coati ng |
| Example 1 | No | / | 0 | 2.0 | / | 0 | 65.2 | Can be left for 20 days | norm al |
| Example 2 | Yes | acetyle ne | 5.00 | 2.0 | / | 0 | 68.7 | N | norm al |
| Example 3 | Yes | acetyle ne | 5.01 | 3.0 | / | 0 | 68.7 | N | norm al |
| Example 4 | Yes | asphalt | 5.03 | 2.0 | / | 0 | 68.7 | N | norm al |
| Example 5 | Yes | methan e | 5.00 | 7.0 | / | 0 | 68.7 | N | norm al |
| Example 6 | Yes | ethylene | 5.00 | 10.0 | / | 0 | 68.7 | N | normal |
| Example 7 | Yes | asphalt | 5.00 | 2.0 | / | 0 | 68.7 | N | norm al |
| Example 8 | Yes | asphalt | 5.00 | 2.0 | / | 0 | 68.7 | N | norm al |
| Example 9 | Yes | asphalt | 5.00 | 2.0 (phosphorus trioxide) | / | 0 | 61.5 | N | norm al |
| Example 10 | Yes | asphalt | 5.00 | 2.0 (lithium phosphate) | / | 0 | 60.1 | N | norm al |
| Example 11. | Yes | acetyle ne | 4.95 | / | 8 | 0 | 68.7 | N | norm al |
| Example 12 | Yes | acetyle ne | 8.0 | / | 30 | 0 | 71.2 | N | norm al |
| Comparati ve example 1 | Yes | asphalt | 5.01 | / | / | 15.9 | 42.8 | Gas producti on after 3 days | pinho le |
| Comparati ve example 2 | Yes | asphalt | 5.01 | / | / | 15.9 | 42.8 | Gas producti on after 3 days | pinho le |
| Comparati ve example 3 | Yes | acetyle ne | 4.95 | 0.5 | / | 10.2 | 51.7 | Can be left for 7 days | A few pinho les |
| Comparati ve example 4 | Yes | acetyle ne | 5.06 | 1.0 | / | 5.1 | 60.2 | Can be left for 15 days | Partia l pinho le |

**Table 2**

| Experiment | Discharge capacity mAh/g | Initial efficiency% | 50-week capacity retention rate% |
|---|---|---|---|
| Example 1 | 1308 | 86.5 | 88.8 |
| Example 2 | 1417 | 88.9 | 89.1 |
| Example 3 | 1420 | 89.5 | 90.5 |
| Example 4 | 1411 | 88.6 | 90.0 |
| Example 5 | 1400 | 88.3 | 89.1 |
| Example 6 | 1404 | 86.5 | 89.4 |
| Example 7 | 1415 | 88.4 | 90.2 |
| Example 8 | 1407 | 90.5 | 90.1 |
| Example 9 | 1388 | 87.0 | 88.8 |
| Example 10 | 1380 | 87.2 | 88.9 |
| Example 11. | 1394 | 88.8 | 90.0 |
| Example 12 | 1405 | 89.7 | 91.8 |
| Comparative example 1 | 1720 | 76.8 | 75.8 |
| Comparative example 2 | 1720 | 76.8 | 75.8 |
| Comparative example 3 | 1401 | 86.7 | 82.2 |
| Comparative example 4 | 1421 | 86.5 | 84.6 |

According to Table 1 and Table 2. it can be seen from Example 2, Example 3, Comparative example 3 and Comparative example 4 that with the increase of the addition amount of P₂O₅, the content of Li₂SiO₃ gradually decreases. When the addition amount reaches 2%, Li₂SiO₃ no longer exists, and the processability of the materials is improved. It can be seen from Examples 1, 2 and 4 that the pre-lithiation reaction after carbon coating and the addition of the nucleating conversion agent can obtain better conversion effect, and the type of the carbon source has no influence on the conversion effect of Li₂SiO₃.

Generally speaking, with the increase of Li₂Si₂O₅ content in the anode material, the cycle performance of the anode material is obviously improved after adding the nucleating conversion agent. When Li₂SiO₃ is completely transformed into Li₂Si₂O₅, the cycle retention rate of the material is stable above 88%.

Examples 9-10 did not use the nucleating conversion agent P₂O₅, but used other kinds of nucleating conversion agents. Compared with Example 4, the capacity and cycle of the materials prepared in Examples 9 and 10 are worse than those added with P₂O₅, which may be caused by different kinds of conversion agents. Because P₂O₅ has a more remarkable effect on the transform of Li₂SiO₃ to Li₂Si₂O₅, and the content of Li₂Si₂O₅ in the material is also much more after P₂O₅ is added, which has a stronger inhibitory effect on the expansion brought by the cyclic process.

A heat absorbent was added in Examples 11-12, which promoted the transformation of Li₂SiO₃ in a high temperature phase to Li₂Si₂O₅ in a low temperature phase, and also made the final product only contain Li₂Si₂O₅, and thus show good initial coulombic efficiency and cycle performance.

No nucleating conversion agent was added in Comparative example 1 on the basis of Example 1, which led to a higher content of Li₂SiO₃, poor processability, more gas production, obvious pinhole after coating, and the initial efficiency and cycle performance were obviously inferior to those of Example 1. The situation of Comparative Example 2 was the same as that of Comparative Example 1, that is, no nucleating conversion agent was added, which led to poor product processability, more gas production, obvious pinhole after coating, and inferior initial efficiency and cycle performance as compared with Example 4.

In Comparative Examples 3 and 4, the addition amount of the nucleating conversion agent was changed on the basis of Example 2, and the mass ratios of silicon oxide to nucleating conversion agent were 100: 0.5 and 100:1, respectively. The nucleating conversion agents in Comparative Examples 3-4 were insufficient, which could not completely transform Li₂SiO₃ into Li₂Si₂O₅, resulting in poor processability of the material, gas production after standing and pinhole during coating.

The applicant declares that the specific methods of the present application are illustrated by the above-mentioned embodiments, but the present application is not limited to the above-mentioned specific methods, i.e., it is not intended that the present application can only be implemented by relying on the above-mentioned specific methods. It should be clear to those skilled in the art that any improvement to the present application, equivalent replacement of raw material, addition of auxiliary components, selection of specific methods, etc., fall within the scope of protection and disclosure of the present application.

## Claims

1. An anode material, comprising SiOₓ and Li₂Si₂O₅, wherein the SiOₓ is dispersed in the Li₂Si₂O₅, and wherein 0≤x≤1.2,
wherein a pH value of the anode material meets 7 < pH < 10.7.

2. The anode material according to claim 1, wherein the anode material satisfies at least one of the following conditions a to c:
a. an average particle size of the anode material is 5µm-50µm;
b. a mass ratio of the SiOₓ to the Li₂Si₂O₅ in the anode material is 1: (0.74-6.6); and c. the SiOₓ is uniformly dispersed in the Li₂Si₂O₅.

3. The anode material according to claim 1 or 2, wherein the anode material satisfies at least one of the following conditions a to c:
a. a carbon coating layer is formed on a surface of the anode material;
b. a carbon coating layer is formed on the surface of the anode material, and a thickness of the carbon coating layer is 10nm-2000nm; and
c. a carbon coating layer is formed on the surface of the anode material, and a mass fraction of a carbon element in the anode material is 4%-6%.

4. A method for preparing the anode material according to any one of claims 1 to 3, comprising the following steps:
mixing a silicon oxide SiO_{y}, a reducing lithium-containing compound and an auxiliary agent, and performing heat treatment to obtain the anode material, wherein the auxiliary agent comprises a nucleating conversion agent or a heat absorbent, and 0<y<2,
wherein the reducing lithium compound comprises at least one of lithium hydride, alkyl lithium, metallic lithium, lithium aluminum hydride, lithium amide or lithium borohydride;
wherein the nucleating conversion agent comprises at least one of phosphorus oxide and phosphate; and
wherein the heat absorbent comprises at least one of LiCl, NaCl, NaNO₃, KNO₃, KOH, BaCl, KCl and LiF.

5. The method according to claim 4, wherein the anode material satisfies at least one of the following conditions a to f:
a. a pH value of the anode material meets 7 < pH < 10.7;
b. an average particle size of the anode material is 5µm-50µm;
c. a mass ratio of the SiOₓ to the Li₂Si₂O₅ in the anode material is 1: (0.74-6.6).
d. a carbon coating layer is formed on a surface of the anode material;
e. a carbon coating layer is formed on the surface of the anode material, and a thickness of the carbon coating layer is 10 nm to 2000 nm; and
f. a carbon coating layer is formed on the surface of the anode material, and a mass fraction of a carbon element in the anode material is 4%-6%.

6. The method according to claim 4 or 5, wherein the method satisfies at least one of the following conditions a to c:
a. a mass ratio of the silicon oxide to the reducing lithium-containing compound is 10: (0.08-1.2);
b. the silicon oxide is silicon monoxide; and
c. the silicon oxide has a D10 > 1.0µm and a Dmax< 50 µ m.

7. The method according to any one of claims 4 to 6, wherein the method satisfies at least one of the following conditions a to f:
a. the phosphorus oxide comprises at least one of phosphorus pentoxide and phosphorus trioxide;
b. the phosphate comprises at least one of lithium phosphate, magnesium phosphate and sodium phosphate;
c. the nucleating conversion agent is phosphorus pentoxide;
d. a melting point of the heat absorbent is less than 700°C;
e. a mass ratio of the silicon oxide to the nucleating conversion agent is 100: (2-10); and f. a mass ratio of the silicon oxide to the heat absorber is 100: (8-30).

8. The method according to any one of claims 4 to 7, wherein the method satisfies at least one of the following conditions a to d:
a. the heat treatment is carried out in a non-oxidizing atmosphere;
b. the heat treatment is carried out in a non-oxidizing atmosphere; the non-oxidizing atmosphere comprises at least one of hydrogen, nitrogen, helium, neon, argon, krypton and xenon;
c. a temperature of the heat treatment is 300°C-1000°C; and
d. a time of the heat treatment is 1.5h to 2.5h.

9. The method according to any one of claims 4 to 8, wherein before mixing the silicon oxide SiO_{y}, the reducing lithium-containing compound and the nucleating conversion agent or the heat absorbent, the method further comprises:
heating and gasifying a raw material of the silicon oxide to generate a silicon oxide gas,
condensing and shaping to obtain the silicon oxide SiO_{y}, wherein 0<y<2.

10. The method according to claim 9, wherein the method satisfies at least one of the following conditions a to g:
a. the raw material of the silicon oxide include silicon and silicon dioxide;
b. a mass ratio of the silicon to the silicon dioxide is 1: (1.8-2.2);
c. a temperature of the heating and gasifying is 1200°C-1400°C;
d. a time for the heating and gasifying is 16h to 20h;
e. a temperature for the condensing is 930°C-970°C;
f. the heating and gasifying is carried out in a protective atmosphere or vacuum; and g. the shaping comprises at least one of crushing, ball milling or grading.

11. The method according to any one of claims 4 to 10, further comprising:
performing carbon coating on a material to be coated with carbon, wherein the material to be coated with carbon comprises at least one of the silicon oxide and the anode material.

12. The method according to claim 11, wherein the method satisfies at least one of the following conditions a to c:
a. the carbon coating comprises at least one of gas-phase carbon coating and solid-phase carbon coating;
b. the carbon coating comprises at least one of gas-phase carbon coating and solid-phase carbon coating, and the conditions of the gas-phase carbon coating are as follows: heating the silicon oxide to 600°C-1000°C in a protective atmosphere, introducing an organic carbon source gas, keeping the temperature for 0.5h-10h, and then cooling; wherein the organic carbon source gas comprises hydrocarbons, and the hydrocarbons comprise at least one of methane, ethylene, acetylene and benzene; and
c. the carbon coating comprises at least one of gas-phase carbon coating and solid-phase carbon coating, and the conditions of the solid-phase carbon coating are as follows: blending the silicon oxide and a carbon source for 0.5h to 2h, and then carbonizing the obtained carbon mixture for 2h to 6h at 600°C-1000°C, and cooling; wherein the carbon source comprises at least one of polymers, saccharides, organic acids or asphalt.

13. The method according to any one of claims 4 to 12, further comprising the following steps:
heating and gasifying silicon and silicon dioxide in a mass ratio of 1: (1.8-2.2) at 1200°C-1400°C in vacuum for 16h-20h, condensing at 930°C-970°C, and shaping to obtain silicon monoxide;
performing carbon coating on the silicon monoxide to obtain carbon-coated silicon monoxide;
mixing the carbon-coated silicon oxide and phosphorus pentoxide according to a mass ratio of 100: (2-10), adding a reducing lithium-containing compound and mixing, and roasting at 450°C-800°C for 1.5h-2.5h in a non-oxidizing atmosphere to obtain the anode material; wherein a mass ratio of the carbon-coated silicon monoxide to the reducing lithium-containing compound is 10: (0.08-1.2).

14. A lithium ion battery, comprising the anode material according to any one of claims 1 to 3 or the anode material prepared by the method according to any one of claims 4 to 13.

## Patentansprüche

1. Anodenmaterial, umfassend SiOₓ und Li₂Si₂O₅, wobei das SiOₓ in dem Li₂Si₂O₅ dispergiert ist und wobei 0 ≤ x < 1,2 ist,
wobei ein pH-Wert des Anodenmaterials 7 < pH < 10,7 erfüllt.

2. Anodenmaterial nach Anspruch 1, wobei das Anodenmaterial mindestens eine der folgenden Bedingungen a bis c erfüllt:
a. eine durchschnittliche Teilchengröße des Anodenmaterials beträgt 5 µm bis 50 µm;
b. ein Massenverhältnis von SiOₓ zu Li₂Si₂O₅ im Anodenmaterial beträgt 1: (0,74-6,6); und
c. das SiOₓ ist gleichmäßig in dem Li₂Si₂O₅ dispergiert.

3. Anodenmaterial nach Anspruch 1 oder 2, wobei das Anodenmaterial mindestens eine der folgenden Bedingungen a bis c erfüllt:
a. auf einer Oberfläche des Anodenmaterials wird eine Kohlenstoffbeschichtungsschicht gebildet;
b. auf der Oberfläche des Anodenmaterials wird eine Kohlenstoffbeschichtungsschicht gebildet, und die Dicke der Kohlenstoffbeschichtungsschicht beträgt 10 nm bis 2000 nm; und
c. auf der Oberfläche des Anodenmaterials wird eine Kohlenstoffbeschichtung gebildet, und der Massenanteil des Kohlenstoffelements im Anodenmaterial beträgt 4% bis 6%.

4. Verfahren zur Herstellung des Anodenmaterials nach einem der Ansprüche 1 bis 3, umfassend die folgenden Schritte:
Mischen eines Siliziumoxids SiO_{y}, einer reduzierenden lithiumhaltigen Verbindung und eines Hilfsmittels und Durchführen einer Wärmebehandlung, um das Anodenmaterial zu erhalten, wobei das Hilfsmittel ein keimbildendes Umwandlungsmittel oder ein Wärmeabsorptionsmittel umfasst und 0 < y < 2 ist,
wobei die reduzierende Lithiumverbindung mindestens eines von Lithiumhydrid, Alkyllithium, metallischem Lithium, Lithiumaluminiumhydrid, Lithiumamid oder Lithiumborhydrid umfasst;
wobei das keimbildende Umwandlungsmittel mindestens eines von Phosphoroxid und Phosphat umfasst; und
wobei das Wärmeabsorptionsmittel mindestens eines von LiCl, NaCl, NaNO₃, KNO₃, KOH, BaCl, KCl und LiF umfasst.

5. Verfahren nach Anspruch 4, wobei das Anodenmaterial mindestens eine der folgenden Bedingungen a bis f erfüllt:
a. ein pH-Wert des Anodenmaterials erfüllt 7 < pH < 10,7;
b. eine durchschnittliche Teilchengröße des Anodenmaterials beträgt 5 µm bis 50 µm; c. ein Massenverhältnis von SiOₓ zu Li₂Si₂O₅ im Anodenmaterial beträgt 1: (0,74-6,6);
d. auf einer Oberfläche des Anodenmaterials wird eine Kohlenstoffbeschichtungsschicht gebildet;
e. auf der Oberfläche des Anodenmaterials wird eine Kohlenstoffbeschichtungsschicht gebildet, und die Dicke der Kohlenstoffbeschichtungsschicht beträgt 10 nm bis 2000 nm; und
f. auf der Oberfläche des Anodenmaterials wird eine Kohlenstoffbeschichtung gebildet, und der Massenanteil des Kohlenstoffelements im Anodenmaterial beträgt 4% bis 6%.

6. Verfahren nach Anspruch 4 oder 5, wobei das Verfahren mindestens eine der folgenden Bedingungen a bis c erfüllt:
a. das Massenverhältnis von Siliziumoxid zu der reduzierenden lithiumhaltigen Verbindung beträgt 10:(0,08-1,2);
b. das Siliziumoxid ist Siliziummonoxid; und
c. das Siliziumoxid weist einen D10-Wert > 1,0 µm und einen Dmax-Wert < 50 µm auf.

7. Verfahren nach einem der Ansprüche 4 bis 6, wobei das Verfahren mindestens eine der folgenden Bedingungen a bis f erfüllt:
a. das Phosphoroxid umfasst mindestens eines von Phosphorpentoxid und Phosphortrioxid;
b. das Phosphat umfasst mindestens eines von Lithiumphosphat, Magnesiumphosphat und Natriumphosphat;
c. das keimbildende Umwandlungsmittel ist Phosphorpentoxid;
d. ein Schmelzpunkt des Absorbers liegt unterhalb von 700 °C;
e. ein Massenverhältnis von Siliziumoxid zu keimbildendem Umwandlungsmittel beträgt 100: (2-10); und
f. ein Massenverhältnis von Siliziumoxid zu dem Absorber beträgt 100: (8-30).

8. Verfahren nach einem der Ansprüche 4 bis 7, wobei das Verfahren mindestens eine der folgenden Bedingungen a bis d erfüllt:
a. die Wärmebehandlung in einer nicht oxidierenden Atmosphäre durchgeführt wird;
b. die Wärmebehandlung in einer nicht oxidierenden Atmosphäre durchgeführt wird; die nicht oxidierende Atmosphäre mindestens eines der Elemente Wasserstoff, Stickstoff, Helium, Neon, Argon, Krypton und Xenon umfasst;
c. eine Temperatur der Wärmebehandlung beträgt 300 °C bis 1000 °C; und
d. eine Dauer der Wärmebehandlung beträgt 1,5 bis 2,5 Stunden.

9. Verfahren nach einem der Ansprüche 4 bis 8, wobei vor dem Mischen des Siliziumoxids SiO_{y}, der reduzierenden lithiumhaltigen Verbindung und des keimbildenden Umwandlungsmittels oder des Wärmeabsorbers das Verfahren weiter umfasst:
Erhitzen und Vergasen eines Materials des Siliziumoxids, um ein Siliziumoxidgas zu erzeugen, Kondensieren und Formen, um das Siliziumoxid SiO_{y} zu erhalten, wobei 0<y<2 ist.

10. Verfahren nach Anspruch 9, wobei das Verfahren mindestens eine der folgenden Bedingungen a bis g erfüllt:
a. das Rohmaterial des Siliziumoxids schließt Silizium und Siliziumdioxid ein;
b. ein Massenverhältnis von Silizium zu Siliziumdioxid beträgt 1: (1,8-2,2);
c. eine Temperatur beim Erhitzen und Vergasen beträgt 1200 °C bis 1400 °C;
d. eine Dauer des Erhitzens und Vergasens beträgt 16 bis 20 Stunden;
e. eine Temperatur beim Kondensieren beträgt 930 °C bis 970 °C;
f. das Erhitzen und Vergasen wird in einer Schutzatmosphäre oder im Vakuum durchgeführt; und
g. das Formen umfasst mindestens eines der folgenden Verfahren: Zerkleinern, Kugelmahlen oder Sortieren.

11. Verfahren nach einem der Ansprüche 4 bis 10, ferner umfassend:
Durchführen einer Kohlenstoffbeschichtung auf einem mit Kohlenstoff zu beschichtenden Material, wobei das mit Kohlenstoff zu beschichtende Material mindestens eines von Siliziumoxid und Anodenmaterial umfasst.

12. Verfahren nach Anspruch 11, wobei das Verfahren mindestens eine der folgenden Bedingungen a bis c erfüllt:
a. die Kohlenstoffbeschichtung umfasst mindestens eine der folgenden Beschichtungen: Gasphasen-Kohlenstoffbeschichtung und Festphasen-Kohlenstoffbeschichtung;
b. die Kohlenstoffbeschichtung umfasst mindestens eine der folgenden Beschichtungen: Gasphasen-Kohlenstoffbeschichtung und Festphasen-Kohlenstoffbeschichtung, und die Bedingungen für die Gasphasen-Kohlenstoffbeschichtung sind wie folgt: Erhitzen des Siliziumoxids auf 600 °C bis 1000 °C in einer Schutzatmosphäre, Einleiten eines organischen Kohlenstoffquellengases, Halten der Temperatur für 0,5 bis 1,0 Stunden und anschließendes Abkühlen; wobei das organische Kohlenstoffquellengas Kohlenwasserstoffe umfasst und die Kohlenwasserstoffe mindestens eines von Methan, Ethylen, Acetylen und Benzol umfassen; und
c. die Kohlenstoffbeschichtung mindestens eine von Gasphasen-Kohlenstoffbeschichtung und Festphasen-Kohlenstoffbeschichtung umfasst Kohlenstoffbeschichtung umfasst, und die Bedingungen der Festphasen-Kohlenstoffbeschichtung wie folgt sind: Mischen des Siliziumoxids und einer Kohlenstoffquelle für 0,5 bis 2 Stunden, anschließendes Karbonisieren der erhaltenen Kohlenstoffmischung für 2 bis 6 Stunden bei 600 °C bis 1000 °C und Abkühlen; wobei die Kohlenstoffquelle mindestens eines von Polymeren, Sacchariden, organischen Säuren oder Asphalt umfasst.

13. Verfahren nach einem der Ansprüche 4 bis 12, ferner umfassend die folgenden Schritte:
Erhitzen und Vergasen von Silizium und Siliziumdioxid in einem Massenverhältnis von 1: (1,8-2,2) bei 1200 °C-1400 °C im Vakuum für 16 bis 20 Stunden, Kondensieren bei 930 °C bis 970 °C und Formen, um Siliziummonoxid zu erhalten;
Durchführen einer Kohlenstoffbeschichtung auf dem Siliziummonoxid, um kohlenstoffbeschichtetes Siliziummonoxid zu erhalten;
Mischen des kohlenstoffbeschichteten Siliziumoxids und des Phosphorpentoxids gemäß einem Massenverhältnis von 100: (2-10), Hinzufügen einer reduzierenden lithiumhaltigen Verbindung und Mischen, und Rösten bei 450 °C bis 800 °C für 1,5 bis 2,5 Stunden in einer nicht oxidierenden Atmosphäre, um das Anodenmaterial zu erhalten; wobei das Massenverhältnis des kohlenstoffbeschichteten Siliziummonoxids zu der reduzierenden lithiumhaltigen Verbindung 10: (0,08-1,2) beträgt.

14. Lithium-Ionen-Batterie, umfassend das Anodenmaterial nach einem der Ansprüche 1 bis 3 oder das Anodenmaterial, hergestellt nach dem Verfahren gemäß einem der Ansprüche 4 bis 13.

## Revendications

1. Matériau d'anode, comprenant SiOₓ et Li₂Si₂O₅, dans lequel SiOₓ est dispersé dans le Li₂Si₂O₅, et dans lequel 0≤x<1.2,
dans lequel la valeur du pH du matériau d'anode est conforme à 7 < pH < 10.7.

2. Matériau d'anode selon la revendication 1, dans lequel le matériau d'anode satisfait à au moins une des conditions suivantes a à c:
a. la taille moyenne des particules du matériau d'anode est comprise entre 5 µm et 50 µm;
b. le rapport massique entre le SiOₓ et le Li₂Si₂O₅ dans le matériau d'anode est de 1: (0.74-6.6); et
c. le SiOₓ est uniformément dispersé dans le Li₂Si₂O₅.

3. Matériau d'anode selon la revendication 1 ou 2, dans lequel le matériau d'anode satisfait à au moins une des conditions suivantes a à c:
a. une couche de revêtement en carbone est formée sur la surface du matériau d'anode;
b. une couche de revêtement en carbone est formée sur la surface du matériau d'anode, et l'épaisseur de la couche de revêtement en carbone est comprise entre 10nm et 2000nm; et
c. une couche de revêtement en carbone est formée sur la surface du matériau d'anode, et la fraction massique d'un élément de carbone dans le matériau d'anode est comprise entre 4% et 6%.

4. Procédé de préparation du matériau d'anode selon l'une quelconque des revendications 1 à 3, comprenant les étapes suivantes :
le mélange d'un oxyde de silicium SiO_{y}, d'un composé contenant du lithium réducteur et un agent auxiliaire, et la réalisation d'un traitement thermique pour obtenir le matériau d'anode, l'agent auxiliaire comprenant un agent de conversion nucléant ou un absorbant de chaleur, et 0<y<2,
dans lequel le composé de lithium réducteur comprend au moins l'un des éléments suivants: hydrure de lithium, alkyllithium, lithium métallique, hydrure de lithium et d'aluminium, amide de lithium ou borohydrure de lithium;
dans lequel l'agent de conversion nucléant comprend au moins un oxyde de phosphore et un phosphate; et
dans lequel l'absorbant thermique comprend au moins l'un des éléments suivants:
LiCl, NaCl, NaNO₃, KNO₃, KOH, BaCl, KCl et LiF.

5. Procédé selon la revendication 4, dans lequel le matériau d'anode satisfait à au moins l'une des conditions suivantes a à f:
a. la valeur du pH du matériau anodique est conforme à 7 < pH < 10.7;
b. la taille moyenne des particules du matériau d'anode est comprise entre 5 µm et 50 µm;
c. le rapport massique entre le SiOₓ et le Li₂Si₂O₅ dans le matériau d'anode est de 1: (0.74-6.6);
d. une couche de revêtement en carbone est formée sur la surface du matériau d'anode;
e. une couche de revêtement en carbone est formée sur la surface du matériau d'anode, et l'épaisseur de la couche de revêtement en carbone est comprise entre 10 nm et 2000 nm; et
f. une couche de revêtement en carbone est formée à la surface du matériau d'anode, et la fraction massique d'un élément de carbone dans le matériau d'anode est comprise entre 4% et 6%.

6. Procédé selon la revendication 4 ou 5, dans lequel le procédé satisfait au moins à l'une des conditions suivantes a à c:
a. le rapport massique entre l'oxyde de silicium et le composé contenant du lithium réducteur est de 10: (0.08-1.2);
b. l'oxyde de silicium est du monoxyde de silicium; et
c. l'oxyde de silicium a un D10 > 1.0µm et un Dmax< 50 µm.

7. Procédé selon l'une quelconque des revendications 4 à 6, dans lequel le procédé satisfait au moins à l'une des conditions suivantes a à f:
a. l'oxyde de phosphore comprend au moins un des éléments suivants: pentoxyde de phosphore et trioxyde de phosphore ;
b. le phosphate comprend au moins l'un des phosphates de lithium, de magnésium et de sodium;
c. l'agent de conversion nucléant est le pentoxyde de phosphore;
d. le point de fusion de l'absorbant de chaleur est inférieur à 700°C;
e. le rapport massique entre l'oxyde de silicium et l'agent de conversion nucléant est de 100: (2-10); et
f. le rapport massique entre l'oxyde de silicium et l'absorbeur de chaleur est de 100: (8-30).

8. Procédé selon l'une quelconque des revendications 4 à 7, dans lequel le procédé satisfait au moins à l'une des conditions suivantes a à d:
a. le traitement thermique est effectué dans une atmosphère non oxydante;
b. le traitement thermique est effectué dans une atmosphère non oxydante; l'atmosphère non oxydante comprend au moins l'un des éléments suivants: hydrogène, azote, hélium, néon, argon, krypton et xénon;
c. la température du traitement thermique est comprise entre 300°C et 1000°C; et
d. la durée du traitement thermique est de 1.5 à 2.5 heures.

9. Procédé selon l'une quelconque des revendications 4 à 8, dans lequel, avant de mélanger l'oxyde de silicium SiO_{y}, le composé contenant du lithium réducteur et l'agent de conversion nucléant ou l'absorbant de chaleur, le procédé comprend en outre:
le chauffage et la gazéification d'une matière première d'oxyde de silicium pour générer un gaz d'oxyde de silicium, la condensation et la mise en forme pour obtenir l'oxyde de silicium SiO_{y}, dans lequel 0<y<2.

10. Procédé selon la revendication 9, dans lequel le procédé satisfait au moins à l'une des conditions suivantes a à g:
a. les matières premières de l'oxyde de silicium comprennent le silicium et le dioxyde de silicium ;
b. le rapport massique entre le silicium et le dioxyde de silicium est de 1: (1.8-2.2);
c. la température de chauffage et de gazéification est comprise entre 1200°C et 1400°C;
d. le temps de chauffage et de gazéification est de 16h à 20h;
e. la température de condensation est de 930°C-970°C;
f. le chauffage et la gazéification sont effectués dans une atmosphère protectrice ou sous vide; et
g. la mise en forme comprend au moins l'un des éléments suivants: le concassage, le broyage à billes ou le calibrage.

11. Procédé selon l'une quelconque des revendications 4 à 10, comprenant en outre:
l'application d'un revêtement en carbone sur un matériau à recouvrir de carbone, dans lequel le matériau à recouvrir de carbone comprend au moins un oxyde de silicium et un matériau anodique.

12. Procédé selon la revendication 11, dans lequel le procédé satisfait au moins à l'une des conditions suivantes a à c:
a. le revêtement en carbone comprend au moins un revêtement en carbone en phase gazeuse et un revêtement en carbone en phase solide;
b. le revêtement en carbone comprend au moins un revêtement en carbone en phase gazeuse et un revêtement en carbone en phase solide, et les conditions du revêtement en carbone en phase gazeuse sont les suivantes: le chauffage de l'oxyde de silicium à 600°C-1000°C dans une atmosphère protectrice, l'introduction d'un gaz source de carbone organique, le maintien de la température pendant 0.5h-10h, puis le refroidissement; dans lequel le gaz source de carbone organique comprend des hydrocarbures, et les hydrocarbures comprennent au moins un parmi le méthane, l'éthylène, l'acétylène et le benzène; et
c. le revêtement en carbone comprend au moins un revêtement en carbone en phase gazeuse et un revêtement en carbone en phase solide , et les conditions du revêtement en carbone en phase solide sont les suivantes : le mélange de l'oxyde de silicium et d'une source de carbone pendant 0.5h à 2h, puis la carbonisation du mélange de carbone obtenu pendant 2h à 6h à 600°C-1000°C, et le refroidissement; dans lequel la source de carbone comprend au moins un polymère, un saccharide, un acide organique ou de l'asphalte.

13. Procédé selon l'une quelconque des revendications 4 à 12, comprenant en outre les étapes suivantes:
le chauffage et la gazéification de silicium et de dioxyde de silicium dans un rapport massique de 1: (1.8-2.2) à 1200°C-1400°C sous vide pendant 16h-20h, la condensation à 930°C-970°C, et la mise en forme pour obtenir du monoxyde de silicium ;
l'application d'une couche de carbone sur le monoxyde de silicium pour obtenir du monoxyde de silicium enrobé de carbone;
le mélange de l'oxyde de silicium enrobé de carbone et le pentoxyde de phosphore dans un rapport massique de 100: (2-10), l'ajout d'un composé contenant du lithium réducteur et le mélange, et la torréfaction à 450°C-800°C pendant 1.5h-2.5h dans une atmosphère non oxydante pour obtenir le matériau d'anode; dans lequel le rapport massique entre le monoxyde de silicium enrobé de carbone et le composé contenant du lithium réducteur est de 10 : (0.08-1.2).

14. Batterie au lithium-ion, comprenant le matériau d'anode selon l'une quelconque des revendications 1 à 3 ou le matériau d'anode préparé par le procédé selon l'une quelconque des revendications 4 à 13.
